Europäisches Patentamt

European Patent Office

Office européen des brevets

(19)

(11) **EP 1 238 718 A1**

(12) **EUROPEAN PATENT APPLICATION**
published in accordance with Art. 158(3) EPC

(43) Date of publication:
**11.09.2002 Bulletin 2002/37**

(51) Int Cl.7: **B09C 1/10**, B09B 3/00,
C02F 3/34

(21) Application number: **00974870.8**

(22) Date of filing: **09.11.2000**

(86) International application number:
**PCT/JP00/07893**

(87) International publication number:
**WO 01/034315 (17.05.2001 Gazette 2001/20)**

(84) Designated Contracting States:
**AT BE CH CY DE DK ES FI FR GB GR IE IT LI LU MC NL PT**
Designated Extension States:
**AL LT LV MK RO SI**

(30) Priority: **11.11.1999 JP 32052299**
**10.12.1999 JP 35112699**
**10.07.2000 JP 2000208844**
**11.07.2000 JP 2000209189**

(71) Applicant: **IDEMITSU KOSAN COMPANY LIMITED Tokyo 100-0005 (JP)**

(72) Inventors:
• **MIYAMOTO, Hideo**
  **Sodegaura-shi, Chiba 299-0205 (JP)**
• **KAWABATA, Takahiro**
  **Sodegaura-shi, Chiba 299-0205 (JP)**
• **SUZUKI, Motoshi**
  **Sodegaura-shi, Chiba 299-0205 (JP)**

(74) Representative:
**Gille Hrabal Struck Neidlein Prop Roos Patentanwälte,**
**Brucknerstrasse 20**
**40593 Düsseldorf (DE)**

(54) **METHOD OF DEGRADING HARDLY DEGRADABLE HARMFUL MATERIAL**

(57)   A process for decomposing hardly decomposable harmful substances which comprises decomposing the hardly decomposable harmful substances contained in soil, ash or water with a microorganism or an enzyme produced by a microorganism, wherein the soil, the ash or the water is treated for decreasing contents of miscellaneous other microorganism or for sterilization and the treated soil, ash or water is brought into contact with at least one microorganism or enzyme selected from microorganisms having ability of decomposing the hardly decomposable harmful substances and enzymes produced by said microorganisms.

EP 1 238 718 A1

**Description**

TECHNICAL FIELD

The present invention relates to a process for decomposing hardly decomposable harmful substances which are contained in exhaust gas, waste water and ash discharged from incineration apparatuses for city garbage and industrial waste materials and from industrial waste water or contained in water and soil contaminated with such substances.

BACKGROUND ART

Various hardly decomposable chemical substances which are well known to be harmful for human health are discharged into the natural environment from incineration apparatuses for city garbage and industrial waste materials and from various other incineration apparatuses and various instruments. Various organic substances adversely affecting the environment are discharged in processes for producing chemical substances. The discharge of these harmful substances is a great social problem.

Among these substances, for example, dioxins etc. are hardly decomposed by organisms and absorbed into many organisms. It is known that the absorbed substances go through the food chains, are accumulated into bodies of animals and concentrated there and exhibit the carcinogenic effects, the teratogenicity and the environmental hormone-like effects. Many compounds among phenols and esters of phthalic acids are considered to exhibit the hormone-like effects and cause problems.

Methods for suppressing generation of dioxins etc. have been examined and proposed. For example, burning exhaust gases from automobiles and incineration apparatuses at high temperatures has been proposed. However, generation of dioxins etc. cannot be sufficiently suppressed by this method. Dioxins etc. released into the atmosphere precipitates on the earth together with ash, rain or snow and are accumulated in soil and water. No effective methods for making the dioxins etc. residual in the natural environment harmless have been found.

Hardly decomposable phenols have been separated by adsorption with active carbon or decomposed with active sludge. However, halogenated phenols, alkylphenols, bisphenols and esters of phthalic acids have problems in that these compounds are hardly biologically decomposed due to the chemical structures and tend to be accumulated in the environment. These compounds are biologically concentrated through the food chains and exhibit various harmful effects on the human being and organisms in the environment.

Therefore, from the standpoint of the environmental protection, it is very important that the hardly decomposable harmful substances are decomposed and removed and thereby, contaminated aqueous media such as ground water, soil and the atmosphere around the contaminated substances are cleaned. Therefore, various technologies for the cleaning have been developed.

For example, decomposition of chemical substances hardly decomposable in the natural environment such as dioxins etc. by microorganisms has been studied recently. It is reported that enzymes decomposing lignin which are produced by some types of microorganisms can decompose dioxins [Bio Industry Vol. 15, No. 2, Pages 5 to 13 (1998); and Kagaku, Vol. 52, No. 10, Pages 24 and 25 (1997)].

For the decomposition of dioxins with enzymes decomposing lignin which are produced by microorganisms, it is further shown in the above reports that enzymes decomposing lignin produced by white rot fungi among wood rot fungi belonging to the basidiomycetes can decompose various chemical substances such as dioxins. It is also shown that the white rot fungi grow on polysaccharides such as cellulose and hemicellulose which are main components of wood as the nutrients and decompose lignin in wood using the polysaccharides as the energy source. Therefore, in forest areas where white rot fungi live, dioxins etc. precipitated from the atmosphere together with rain water tend to be decomposed with the enzymes decomposing lignin which are produced by white rot fungi.

On the other hand, it is highly probable that, in the many areas except for the forest areas where white rot fungi live, the accumulation of dioxins etc. proceeds further and the adverse effects on living things seriously increase.

DISCLOSURE OF THE INVENTION

Development of a process for decomposing hardly decomposable harmful substances which are contained in exhaust gases, industrial waste water and ash discharged from incineration apparatuses into the natural environment and accumulated in soil and water contaminated with such substances and for making the environment harmless has been strongly desired.

As the result of extensive studies conducted by the present inventors to overcome the above problems, it was found that, when soil, ash or water containing hardly decomposable harmful substances present in the natural environment was inoculated with microorganisms having the ability of decomposing hardly decomposable harmful substances, for example, when soil was inoculated with such microorganisms, competition took place between the inoculated microorganisms and microorganisms resident in the soil and it was difficult that the inoculated microorganisms grew well and the desired effect of the microorganisms was exhibited. It was also found that, when the resident microorganisms were held under control, the inoculated microorganisms could grow without the adverse effect of the resident microorganisms and the desired effect of the microorganisms could be exhibited. The present invention has been completed based on the knowledge.

The present invention has an object of providing a process for decomposing hardly decomposable harmful substances which are contained in exhaust gas, industrial waste water and ash discharged from incineration apparatuses and manufacturing facilities into the natural environment and accumulated in water and soil contaminated with such substances and making the environment harmless by using enzymes exhibiting excellent stability or microorganisms producing enzymes with stability.

As the result of extensive studies conducted by the present inventors to overcome the above problems, it was also found to be effective for decomposing the hardly decomposable harmful substances that miscellaneous other microorganisms living in soil, ash or water containing the hardly decomposable harmful substances were grown, decreased or eliminated depending on the properties of the microorganisms before the soil, ash or water containing the hardly decomposable harmful substances was brought into contact with the microorganisms having the ability of decomposing the hardly decomposable harmful substances or enzymes produced by the microorganisms. The present invention has been completed based on this knowledge also.

The present invention can be summarized as follows:

(1) A process for decomposing hardly decomposable harmful substances contained in soil, ash or water with a microorganism or an enzyme produced by a microorganism, wherein the soil, the ash or the water is treated for decreasing miscellaneous other microorganisms or for sterilization and the treated soil, ash or water is brought into contact with at least one microorganism or enzyme selected from microorganisms having ability of decomposing the hardly decomposable harmful substances and enzymes produced by said microorganisms;

(2) The process described in (1), wherein the hardly decomposable harmful substances are substances selected from dioxins, halogenated biphenyls, halogenated hydrocarbons, bisphenols, alkylphenols, halogenated phenols and esters of phthalic acids;

(3) The process described in (1), wherein the enzymes produced by said microorganisms are manganese peroxidase, lignin peroxidase, laccase, benzene monooxygenase and benzene dioxygenase;

(4) The process described in (1), wherein the microorganisms having ability of decomposing the hardly decomposable harmful substances are microorganisms producing manganese peroxidase, microorganisms producing lignin peroxidase, microorganisms producing laccase, microorganisms producing benzene monooxygenase and microorganisms producing benzene dioxygenase;

(5) The process described in (1), wherein the microorganisms having ability of decomposing the hardly decomposable harmful substances are microorganisms belonging to any genera selected from genera of Schizophyllum, Pleurotus, Trametes, Lentinus, Rhizoctonia, Funalia, Pycnoporus, Merulius, Myceliophtora, Coprinus, Agaricus, Pholiota, Flammulina, Ganoderma, Daedaleopsis, Favolus, Lyophyllum, Aspergillus and Auricularia;

(6) The process described in (1), wherein the treatment for decreasing miscellaneous other microorganisms or for sterilization is conducted in accordance with a heating treatment, a chemical treatment or a combination of a heating treatment and a chemical treatment;

(7) The process described in (6), wherein the heating treatment is conducted at a temperature of 60°C or higher.

(8) The process described in (6), wherein the heating treatment is conducted using a heat generating substance which generates heat by reaction with oxygen or water;

(9) The process described in (1), which comprises successive steps of:

(i) adding a heat generating substance which generates heat by reaction with oxygen or water to soil contaminated with the hardly decomposable harmful substances in an amount of 5% by weight or more based on an amount of the dried soil and stirring a resultant mixture for mixing;

(ii) adding water to the soil containing the heat generating substance so that the heat generating substance reacts with water and a temperature of the soil is raised to 60°C or higher; and

(iii) adding a microorganism having ability of decomposing the hardly decomposable harmful substances to the soil after the heated soil is left standing and a temperature of the soil is lowered to 40°C or lower;

(10) The process according to Claim 9, wherein the heat generating substance is at least one substance selected from a group consisting of calcium oxide, iron powder, graphite, sulfur, iron(II) oxide, magnesium, molybdenum, nickel, tris(acetylacetonato)aluminum, bis(acetylacetonato)-copper, tris(acetylacetonato)iron(III), bis(acetylacetonato)magnesium, dibenzenemolybdenum, molybdenum hexacarbonyl, diethylsilanediol and diethylzinc;

(11) The process described in (9), which further comprises, between step (ii) and step (iii), a step (ii') of adjusting pH of the soil into a range of 4 to 10;

(12) The process described in (9), which further comprises, after step (iii), a step of adding water to the soil so that a content of water is adjusted to 15% by weight or more based on an amount of the soil;

(13) The process described in (6), wherein the chemical treatment is conducted by using an agent selected from ethyl alcohol, ethylene oxide, invert soaps, limonene, veratryl alcohol, diethyl dicarbonate, hydrogen peroxide, hypochlorous acid, hydrochloric acid and chloropicrin;

(14) The process described in (1), which comprises adding a nutrient of the microorganism having ability of decomposing the hardly decomposable harmful substances to the soil, the ash or the water containing the hardly decomposable harmful substances and bringing the soil, the ash or the water containing the added nutrient into contact with the microorganism;

(15) The process described in (1), wherein the hardly decomposable substances are brought into contact with the microorganism having ability of decomposing the hardly decomposable harmful substances or the enzyme produced by said microorganism in a system shielded from contamination with miscellaneous other microorganisms;

(16) The process described in (1), wherein inorganic residual chlorine compounds contained in the water containing the hardly decomposable harmful substances are removed or decomposed into chlorine ion before the water is brought into contact with the microorganism;

(17) The process described in (1), wherein the hardly decomposable harmful substances contained in the water is decomposed at a pH in a range of 3 to 11;

(18) A process for decomposing hardly decomposable harmful substances in soil contaminated with hardly decomposable harmful substances, the process comprising steps of:

(a) conducting isomer analysis of the hardly decomposable harmful substances and calculating a toxic equivalent (TEQ) per a unit amount of the contaminated soil;

(b) growing microorganisms having ability of decomposing the hardly decomposable harmful substances in the soil contaminated with the hardly decomposable harmful substances and selecting from the grown microorganisms a group of microorganisms having excellent ability of decomposing the hardly decomposable harmful substances which are specified in step (a);

(c) adding nutrients to promote growth of resident microorganisms present in the soil contaminated with the hardly decomposable harmful substances when the resident microorganisms have ability to decompose the hardly decomposable harmful substances;

(d) treating the soil for suppressing growth of resident microorganisms present in the soil contaminated with the hardly decomposable harmful substances and inoculating and promoting growth of microorganisms having the ability of decomposing the hardly decomposable harmful substances when the resident microorganisms suppress growth of the microorganisms having the ability of decomposing the hardly decomposable harmful substances;

(e) promoting decomposition of the hardly decomposable harmful substances with enzymes produced by the microorganisms having the ability of decomposing the hardly decomposable harmful substances; and

(f) adjusting conditions for growth of the microorganisms having the ability of decomposing the hardly decomposable harmful substances by monitoring amounts of the enzymes having the ability of decomposing the hardly decomposable harmful substances produced by the microorganisms and released into the soil; and

(19) The process described in (18), wherein the decomposition of the hardly decomposable harmful substances with the enzymes produced by the microorganisms is promoted by addition of at least one substance selected from a group consisting of surfactants, oleic acid, olive oil, linseed oil, fish oil and limonene.

## THE MOST PREFERRED EMBODIMENT TO CARRY OUT THE INVENTION

The preferred embodiments of the present invention will be described in the following.

In the process for decomposing hardly decomposable harmful substances of the present invention, the hardly decomposable harmful substances are brought into contact with microorganisms and/or enzymes produced by the microorganisms, which have the ability of decomposing the hardly decomposable harmful substances. The hardly decomposable harmful substances are decomposed due to the contact and converted into compounds exhibiting no toxicity or decreased danger to human bodies or other animals so that the substances are made harmless.

In the above treatment, the hardly decomposable harmful substances may be treated after being separated from the soil, the ash and the waste water. However, since handling of such substances is dangerous, it is preferable that the soil, ash and waste water containing the contaminants are treated.

In the present invention, examples of the hardly decomposable harmful substances include dioxins, halogenated biphenyls, halogenated hydrocarbons, bisphenols, alkylphenols, halogenated phenols and esters of phthalic acids.

The dioxins are dioxins having one or more chlorine atoms or bromine atoms which are obtained by substituting hydrogen atoms in two benzene rings of dibenzo-p-dioxin and dibenzofuran with chlorine atoms or bromine atoms. The dioxins include a great variety of compounds having various numbers of chlorine atoms or bromine atoms as the substituents at various positions on the benzene rings.

Among the dioxins, polychlorinated compounds having 4 or more chlorine atoms in one molecule exhibit particularly high toxicity to human bodies. Examples of such polychlorinated compound include polychlorinated compounds of dibenzo-p-dioxin such as 2,3,7,8-tetrachlorodibenzo-p-dioxin, 1,2,3,7,8-pentachlorodibenzo-p-dioxin, 1,2,3,4,7,8-hexachlorodibenzo-p-dioxin, 1,2,3,4,6,7,8-heptachlorodibenzo-p-dioxin and 1,2,3,4,6,7,8,9-octachlorodibenzo-p-dioxin; and polychlorinated compounds of dibenzofuran such as 2,3,7,8-tetrachlorodibenzofuran, 1,2,3,7,8-pentachlorodibenzofuran, 2,3,4,7,8-pentachlorodibenzofuran, 1,2,3,4,7,8-hexachlorodibenzofuran, 1,2,3,6,7,8-hexachlorodibenzofuran, 1,2,3,7,8,9-hexachlorodibenzofuran, 2,3,4,6,7,8-hexachlorodibenzofuran, 1,2,3,4,6,7,8-heptachlorodibenzofuran and 1,2,3,4,6,7,8,9-octachloro-dibenzofuran.

Examples of the halogenated biphenyl include coplanar PCB's having chlorine atoms at the positions other than the ortho-positions such as 3,3',4,4'-tetrachlorobiphenol, 3,3',4,4',5-pentachlorobiphenol and 4,4',5,5'-hexachlorobiphenol.

Among the above chlorinated compounds, 2,3,7,8-tetrachloro-dibenzo-p-dioxin exhibits the highest toxicity.

Examples of the bisphenol include 2,2-bis(4-hydroxyphenyl)propane and 1,1-bis(4-hydroxyphenyl)cyclohexane. Between the above compounds, 2,2-bis(4-hydroxyphenyl)propane can be treated advantageously in accordance with the process of the present invention.

Examples of the alkylphenol include nonylphenol, pentylphenol, octylphenol and tertiary-butylphenol.

Examples of the halogenated phenol include dichlorophenol, trichlorophenol, tetrachlorophenol and pentachlorophenol.

Examples of the ester of phthalic acid include dibutyl phthalate, butyl benzyl phthalate and di-2-ethylhexyl phthalate.

In the present invention, examples of the halogenated hydrocarbon include mono-, di-, tri- and tetrahalogenated methanes, halogenated ethanes having 1 to 5 halogen atoms, halogenated ethylenes having 1 to 3 halogen atoms and halogenated propylenes having 2 or 3 halogen atoms.

Specific examples of the halogenated hydrocarbon include monochloromethane, dichloromethane, trichloromethane, tetrachloro-methane, monochloroethane, dichloroethane, trichloroethane, monochloro-ethylene, dichloroethylene, trichloroethylene, trichloropropylene and tetrachloroethylene. Among the above compounds, trichloroethylene is advantageously treated in accordance with the process of the present invention.

Many of the above hardly decomposable harmful substances treated in accordance with the process of the present invention are so-called external substances disturbing internal secretion which are suspected to be accumulated in bodies of animals and cause various problems. These substances are chemical substances which are present unevenly in the environment, exhibit functions similar to hormones and disturb internal secretion. These substances exhibit great adverse effects on the ecology of animals and the human health such as the immunity system, the internal secretion system and the neuro system in extremely small amounts. Therefore, it is desired that the external substances disturbing internal secretion are decomposed and made harmless. The decomposition process of the present invention is effective, in particular, for decomposition of the above external substance disturbing internal secretion among hardly decomposable harmful substances.

As the microorganism having the ability of decomposing hardly decomposable harmful substances which is used for decomposing the above hardly decomposable harmful substances, for example, microorganisms exhibiting high productivity of enzymes such as microorganisms producing manganese peroxidase, microorganisms producing lignin peroxidase, microorganisms producing laccase, microorganisms producing benzene monooxygenase and microorganisms producing benzene dioxygenase are used. Among the above microorganisms, microorganisms producing laccase are preferable. The microorganisms producing laccase include microorganisms producing lignin peroxidase, manganese peroxidase and the like in combination with laccase. Specifically, as the microorganism having the ability of decomposing hardly decomposable harmful substances, microorganisms belonging to any genera selected from genera of Schizophyllum, Pleurotus, Trametes, Lentinus, Rhizoctonia, Funalia, Pycnoporus, Merulius, Myceliophtora, Coprinus, Agaricus, Pholiota, Flammulina, Ganoderma, Daedaleopsis, Favolus, Lyophyllum, Aspergillus and Auricularia can be used. The microorganism itself may be used or an enzyme produced by the microorganism may be used after separation from the culture medium in accordance with a process for separation such as the process using an ion exchange resin. A combination of the enzyme and the microorganism itself may also be used.

Examples of the enzyme produced by the above microorganism include manganese peroxidase, lignin peroxidase, laccase, benzene monooxygenase and benzene dioxygenase. In the present invention, the above enzymes may be used in combination. For example, laccase containing lignin peroxidase and manganese peroxidase may be used.

In the present invention, a mixture of a live microorganism and an enzyme separated from the culture medium of the microorganism can also be used. The present invention can be performed by using any of those described above. However, from the standpoint of maintaining the activity of the enzyme for a long time, it is effective in the cleaning of contaminated soil that the live microorganism is used. In the cleaning of the water, the use of the live microorganism, the use of the enzyme alone or the use of a combination of the live microorganism and the enzyme can be selected in accordance with the conditions.

When the enzyme separated from the culture medium of the microorganism is used, it is preferable that a mediator is added so that the activity of the enzyme is most effectively exhibited. As the mediator, for example, phenol compounds such as 1-hydroxybenzotriazole, aniline compounds such as 2,2'-azinobis(3-ethylbenzothiazoline-6-sulfonic acid) and phenothiazine compounds such as phenothiazine-10-propionic acid can be advantageously used.

The above microorganisms can be cultured in accordance with a conventional method of culture. For example, the microorganisms can be cultured using a liquid culture medium of potato dextrose, a liquid culture medium of oat meal or a solid culture medium mixed with wheat bran, rice bran, wood chips, barley or rice straw. In a laboratory, the culture can be conducted in a culture medium of potato dextrose at 20 to 40°C for 5 days. For culture in a large scale, ordinary culture in a tank using a liquid culture medium is preferable. The culture may also be conducted using a solid culture medium such as a solid medium derived from plants such as whole wheat or an inorganic porous support impregnated with sugar, nitrogen, phosphorus and minerals.

As a component of the culture medium, a medium prepared by mixing a wood cellulose source with nutrients, followed by addition of water and sterilization may also be used. As the wood cellulose source, broadleaf trees are preferable. However, needleleaf trees can also be used. When a needleleaf tree is used, it is preferable that saw dust or chips are exposed to the outside weather for several months so that components adversely affecting the growth of the microorganisms are removed. A wood cellulose source of a mixture of broadleaf trees and needleleaf trees can also be used. As the nutrients, wheat bran, rice bran, corn bran, soybean cakes, rapeseed cakes or rinds of citrus fruits are used.

In the culture of the microorganisms, the concentration of microorganisms in the obtained product of the culture is in the range of $1 \times 10^2$ cfu (colony forming unit) or greater, preferably in the range of $1 \times 10^2$ to $1 \times 10^{10}$ cfu and preferably in the range of $1 \times 10^3$ to $1 \times 10^7$ cfu per 1 g of the dried plant organic substances. When the concentration is smaller than the above range, there is the possibility that the growth of the microorganism is slow when the microorganism is inoculated into water or soil containing the hardly decomposable harmful substances and that the preferential growth of the inoculated microorganism becomes difficult in the presence of other microorganisms already present in the water or the soil.

For the culture of the microorganism, any of hyphae and spores can be used. In general, hyphae are used since the culture is easily conducted.

In the present invention, soil, ash or water containing the hardly decomposable harmful substance is treated for decreasing the contents of miscellaneous other microorganisms or for sterilization before the hardly decomposable harmful substances are brought into contact with the microorganisms or the enzymes produced by the microorganisms. It is preferable that the treatment for decreasing the contents of miscellaneous other microorganisms or for sterilization is conducted in accordance with a heating treatment and/or a chemical treatment. It is effective that the heating treatment and the chemical treatment are conducted in combination. It is also possible that other processes such as sterilization by exposure to ultraviolet light and filtration through a filter are conducted separately or in combination with any of the above processes.

When the soil, the ash or the water containing the hardly decomposable harmful substances which has been treated for decreasing the contents of miscellaneous other microorganisms is brought into contact with a microorganism having the ability of decomposing the hardly decomposable harmful substances, it is effective that nutrients of the microorganism is added in advance to the soil, the ash or the water containing the hardly decomposable harmful substances. As the nutrient, cereals such as barley, wheat, rice and corn and byproducts of cereals such as wheat bran, rice bran, corn bran and bean-curd are preferable. Cellulose sources such as wood chips and coconut fibers, rinds of citrus fruits can also be used. Corn steep liquor, meat extracts and potato extracts which are absorbed into porous clay minerals can also be used. The nutrient is added in an amount of 1 to 50% by weight and preferably 5 to 20% by weight based on the amount of the soil, the ash or the water containing the hardly decomposable harmful substances which are subjected to the treatment for decreasing the content of miscellaneous other microorganism or for sterilization. When an enzyme produced by the microorganism is used for decomposition of the hardly decomposable harmful substances, the addition of the nutrient is not necessary.

As described above, when the microorganism having the ability of decomposing the hardly decomposable harmful substances is used for the treatment for decreasing the contents of miscellaneous other microorganisms or for sterilization, it is preferable that the soil, the ash or the water containing the hardly decomposable harmful substances is treated for decreasing miscellaneous microorganisms living in the soil, the ash or the water or for sterilization after the nutrient for the microorganism is added.

It is preferable that the heating treatment of the contaminated soil is conducted at a temperature of 60°C or higher and more preferably at a temperature of 65 to 150°C. The time of the heating treatment is various depending on the temperature of the heating treatment and is, in general, in the range of 5 minutes to 48 hours. When contaminated water is treated, the heating treatment can be conducted under a raised pressure. Therefore, the temperature of the heating treatment is 60°C or higher and preferably 65 to 121°C and the time of the heating treatment is in the range of 3 seconds to 3 hours and preferably in the range of 10 minutes to 3 hours. The heating treatment may also be conducted at a low temperature such as 60°C for several seconds or for a longer time at a temperature of 100°C or higher. A sufficient effect of decreasing the contents of miscellaneous other microorganisms can be obtained at a temperature exceeding 60°C. The above maximum temperature is set at 121°C since almost all miscellaneous other microorganisms are killed at this temperature and a treatment at a temperature exceeding 121°C is not necessary.

Contaminated soil and ash of incineration laid in outdoor fields may be collected and subjected to the heating treatment. When soil in a cultivated land is treated, the soil at the surface may be treated without separating from the remaining portions. For example, the soil may be covered with agricultural transparent plastic sheets and the inside of the covered area may be heated by a heater or with hot water or steam. When a vacant land having weeds is treated, the soil at the surface may be burned by a gas burner together with the weeds so that the soil is treated for decreasing the contents of miscellaneous other microorganisms living in the land or for sterilization.

The chemical treatment can be conducted by using an organic sterilizing agent such as ethyl alcohol, ethylene oxide, invert soap, limonene, veratryl alcohol and diethyl dicarbonate or an inorganic sterilizing agent such as hydrogen peroxide, hypochlorous acid, hydrochloric acid or chloropicrin.

When the contaminated soil or ash is treated with ethyl alcohol, it is preferable that an aqueous solution of ethyl alcohol having a concentration of 60 to 100% (w/v) and more preferably a concentration of 70 to 100% is used. When the concentration of ethyl alcohol is smaller than 60% (w/v), the effect of decreasing the contents of miscellaneous other microorganisms is occasionally insufficient. The amount of ethyl alcohol used for treating the contaminated soil is 1 to 10 liters/m$^2$. The treatment may be conducted by using the entire amount at once or in 2 or 3 separated portions in successive 2 or 3 days. When the contaminated water is treated, it is preferable that the amount of ethyl alcohol is 0.05 to 0.3 liters per 1 liter of the contaminated water. When limonene, veratryl alcohol or diethyl dicarbonate is used as the agent for the treatment, the treatment can be conducted in the same manner as that in the treatment with ethyl alcohol. Limonene and veratryl alcohol may be used in combination with ethyl alcohol.

When the contaminated soil or ash is treated by using hydrogen peroxide as the agent for the treatment, it is preferable that an aqueous solution having a concentration smaller than 30% (w/v) is used. In this case, a mixed aqueous solution containing hydrogen peroxide and ethyl alcohol may be used. When the soil is treated with hydrogen peroxide, it is preferable that hydrogen peroxide is added in small separate portions since the soil is foamed by the addition.

When the contaminated soil or ash is treated by using hypochlorous acid as the agent for the treatment, powder of calcium hypochlorite is mixed into the soil or the ash and hypochlorous acid is generated by the action of water and carbon dioxide in the air. Since hypochlorous acid generates chlorine by decomposition, it is preferable that the amount of calcium hypochlorite is in the range of 1 to 10 g per 10 kg of the treated soil or ash. When the contaminated water is treated, it is preferable that the amount of calcium hypochlorite is 0.01 to 1 g/liter.

When the above organic or inorganic sterilizing agent is used, it is necessary that the concentration of the sterilizing agent is lowered to a concentration which does not adversely affect the decomposition of the hardly decomposable harmful substances before the substances are brought into contact with the microorganism or the enzyme.

Among the processes for decreasing the content of miscellaneous other microorganism or for sterilization described above, the heating treatment is preferable from the standpoint of the cost, the easiness of operation and prevention of secondary contamination.

When waste water from a process for producing chlorine compounds or a process using chlorine in reactions is treated, hypochlorous acid, hypochlorous ion, oxygen dichloride and molecular chlorine are contained in addition to the hardly decomposable harmful substances in many cases. Since these inorganic chlorine compounds have strong oxidizing ability, miscellaneous other microorganisms in the waste water have been completely killed in many cases. However, when the inorganic chlorine compounds are remaining in great amounts, the microorganism used for decomposition of the hardly decomposable harmful substances is occasionally killed or the enzyme is occasionally deactivated. Therefore, when the concentration of the inorganic chlorine compounds in the waste water is great, it is very important that the inorganic chlorine compounds are removed or decomposed into the chlorine ion. To remove or decompose the inorganic chlorine compounds, it is preferable that a reducing agent is added since the removal or the decomposition can be achieved effectively at a low cost. Alternatively, decomposition or adsorption with salts of sulfurous acid, ammonia, nitrous acid, sodium thiosulfate, organic compounds or active carbon may be conducted. As the organic compound, corn steep liquor (CSL), theriac, rice bran and corn bran can be used. Reducing compounds of iron and manganese can also be used.

The hypochlorous acid, hypochlorous ion and molecular chlorine present in the waste water for the treatment can also be removed by aeration of the waste water. By blowing the air or an inert gas into the water for the treatment, the chlorine compounds can be decomposed and removed from the waste water for the treatment in the form of chlorine gas.

It is preferable that the treatment for removing the residual inorganic chlorine compounds or decomposing the residual inorganic chlorine compounds into chlorine ion is conducted after the treatment for decreasing the content of miscellaneous other microorganisms or for sterilization.

By decreasing the contents of miscellaneous other microorganisms which are present in the soil, the ash or the water containing the hardly decomposable harmful substances and do not have the ability of decomposing the hardly decomposable harmful substances or by sterilizing the soil, the ash or the waste water as described above, 95% or more of the miscellaneous other microorganisms present in the contaminated soil, ash or waster water can be killed. When the microorganism or the enzyme produced by the microorganism having the ability of decomposing the hardly decomposable harmful substances is inoculated into the contaminated soil, ash or waster water without any treatments on the miscellaneous other microorganisms living in the soil, the ash or the waste water, it is difficult that the inoculated microorganism prevails over the miscellaneous other microorganisms. Therefore, in accordance with the process of the present invention, the cost, the labor and the time of the treatment for decreasing the contents of miscellaneous other microorganisms within the above range can be remarkably decreased in comparison with the great cost, labor and time required for completely eliminating miscellaneous other microorganisms living in the contaminated soil, ash or waste water.

In the present invention, when the treatment for decreasing the contents of miscellaneous other microorganisms or for sterilization is conducted in accordance with the heating treatment, a heat generating substance which generates heat by reaction with oxygen or water can be used. Examples of this process include the process comprising successive steps of:

(i) adding a heat generating substance which generates heat by reaction with oxygen or water to soil contaminated with the hardly decomposable harmful substances in an amount of 5% by weight or more based on an amount of the dried soil and stirring a resultant mixture for mixing;

(ii) adding water to the soil mixed with the heat generating substance so that the heat generating substance reacts with water and a temperature of the soil is raised to 65°C or higher and preferably to 70°C or higher; and

(iii) adding a microorganism having ability of decomposing the hardly decomposable harmful substances to the soil after the heated soil is left standing and the temperature of the soil is lowered to 40°C or lower.

The steps in the above process will be described in more detail in the following.

In step (i), a heat generating substance which generates heat by reaction with oxygen and/or water is added to soil contaminated with the hardly decomposable harmful substances in an amount of 5% by weight or more based on the dried amount of the soil and stirring the resultant mixture for mixing.

This step is conducted to prevent uneven dispersion of the heat generating substance in the soil and formation of portions which are not heated and to heat the entire soil uniformly when heat is generated from the heat generating substance in the following step.

Examples of the heat generating substance include calcium oxide, iron powder, graphite, sulfur, iron(II) hydroxide, magnesium, molybdenum, nickel, tris(acetylacetonato)aluminum, bis(acetylacetonato)copper, tris(acetylacetonato)iron(III), bis(acetylacetonato)magnesium, dibenzenemolybdenum, molybdenum hexacarbonyl, diethylsilanediol and diethylzinc. Among these substances, calcium oxide and iron powder are preferably used. Calcium oxide reacts with water and generates heat. Iron powder reacts with water and oxygen and generates heat. Iron powder can be used as a mixture with sodium chloride and active carbon.

In step (i), it is preferable that the heat generating substance is added in an amount of 5% by weight or more based on the amount of the dried soil. When the amount of the heat generating substance is smaller than 5% by weight, the soil is not sufficiently heated when water is added to the soil.

In step (ii), water is added to the soil mixed with the heat generating substance so that the heat generating substance reacts with water and a temperature of the soil is raised to 60°C or higher and preferably to 65 to 150°C.

In this step, resident microorganisms which adversely affect the growth of the microorganism having the ability of decomposing the hardly decomposable harmful substances are killed. This step is conducted also for adjusting the temperature to a suitable value when the microorganism having the ability of decomposing the hardly decomposable substances are added in the following step.

After water is added to the soil, the soil may be covered with plastic sheets or contained in an insulated container so that the temperature is maintained. The soil may be further heated by using heated water, an electric heater or infrared light.

In step (iii), the microorganism having the ability of decomposing the hardly decomposable harmful substances is added to the soil after the heated soil is left standing and the temperature of the soil is lowered to 40°C or lower and preferably in the range of 20 to 40°C. The above range is preferable since the microorganism having the ability of decomposing the hardly decomposable harmful substances can actively work in this temperature range.

When the above heat generating substance is an acidic substance or an alkaline substance, it is preferable that (ii') a step of adjusting pH of the soil into the range of 4 to 10 is inserted between step (ii) and step (iii). The adjustment of pH can be conducted by adding a conventional alkaline or acidic substance. It is preferable that pH is in the range of 4.4 to 9.5 since the microorganism having the ability of decomposing the hardly decomposable harmful substances can actively work in this range of pH.

In the above process, it is preferable that, before step (i) is conducted, the soil is further dried and the content of water in the soil is adjusted to 10% by weight or smaller. When the soil contains water in an excessively great amount before the heat generating substance is added, abnormal heat generation occasionally takes place in the reaction of water and the heat generating substance.

It is preferable that, after step (iii) has been completed, water is further added to the soil and the content of water in the soil is adjusted to 15% by weight or greater and more preferably to 20% by weight or greater since the greater the content of water in the soil, the more active the work of the microorganism added to the soil. The content of water has no upper limit. However, when the content of water is excessively great, the soil flows out due to separation of the soil and water and also the concentration of oxygen decreases. Therefore, it is not preferable that water is added in an unnecessarily great amount.

It is preferable that, after step (iii) has been completed, the soil is covered with plastic sheets or contained in a covered apparatus such as a green house since flowing out of the soil and the microorganism due to rain can be prevented.

In the present invention, the soil, the ash or the water containing the hardly decomposable harmful substances is treated for decreasing contents of miscellaneous other microorganisms or for sterilization and the treated soil, ash or water is brought into contact with at least one microorganism or enzyme selected from the microorganisms having ability of decomposing the hardly decomposable harmful substances and enzymes produced by the microorganisms. The reaction of decomposing the hardly decomposing harmful substances by the above microorganism or the enzyme produced by the microorganism which is brought into contact with the substances is conducted at a temperature in the range of 10 to 85°C, preferably in the range of 20 to 80°C and more preferably in the range of 20 to 60°C. When the temperature of the reaction is lower than 10°C, the growth of the microorganism in the water or the soil is slow and the reaction of the enzyme is also slow. When the temperature of the reaction exceeds 85°C, the enzyme tends to be deactivated.

When the above reaction is conducted, it is preferable that pH of the water or the soil containing the hardly decomposable harmful substances is in the range of 3 to 11 and more preferably in the range of 3.5 to 10.5. When pH is small than 3, the reaction of the enzyme is slow. When pH exceeds 11, the reaction of the enzyme is slow and the enzyme tends to be deactivated. Therefore, when pH of the water or the soil is outside the range of 3 to 11, it is preferable that pH is adjusted suitably by adding an inorganic or organic acid or an alkali so that the reaction of the enzyme proceeds smoothly.

In the present invention, when a solid product of the culture of the above microorganism is used, it is preferable that the solid product is used, for example, in an amount of 0.1 to 20% by weight based on the amount of the dried soil. When the amount is smaller than 0.1% by weight, a sufficient effect of making the hardly decomposable harmful substances in the soil harmless cannot be obtained, occasionally. When the amount exceeds 20% by weight, the effect proportional to the added amount is not obtained and the amount is economically disadvantageous.

In the present invention, it is preferable that the microorganism and/or the enzyme produced by the microorganism described above is added to the water or the soil which has been treated for decreasing the contents of miscellaneous other microorganisms or for sterilization and the hardly decomposable substances are decomposed in a system which is shielded from contamination with miscellaneous other microorganisms. For example, it is preferable that, when waste water discharged from a process in a plant in a sterile condition is treated, the waste water is kept shielded from the outside environment before the waste water is introduced into an apparatus for decomposition via a piping for the introduction of the waste water and the microorganism or the enzyme is added to the introduced waste water in the apparatus for decomposition. When water which cannot be easily shielded from contamination with miscellaneous other microorganisms such as water coming out of a landfill with ash of incineration or waste water used for washing smoke in some incineration facilities is treated, it is preferable that the water is sterilized immediately before the water is introduced into the apparatus for decomposition. The treated water is then introduced into the apparatus for decomposition and the microorganism or the enzyme is added.

In the decomposition reaction with the microorganism or the enzyme, oxygen is necessary. Therefore, it is preferable that, when the treatment is conducted under the sterile condition, a gas containing oxygen such as the air is sterilized with a filter or the like before the gas is introduced into the water for the treatment.

When the hardly decomposable harmful substances are decomposed by the above reaction, a copper compound may be added in combination with the microorganism or the enzyme. As the copper compound, for example, copper sulfate and copper chloride are preferably used. It is preferable that the amount of the copper compound is 0.01 to 1 millimolar concentration in the water or the soil containing the hardly decomposable harmful substances. Productivity and stability of the enzyme are improved by the addition of the copper compound.

When the decomposition of the hardly decomposable harmful compound described above is completed, the microorganism in the fixed form, the enzyme in the fixed form, the microorganism in the suspended form and the nutrients are separated from the treated water by a filter or a centrifuge and the treated water can be released to the outside as ordinary waste water. The microorganism in the fixed form, the enzyme in the fixed form, the microorganism in the suspended form and the nutrients which are separated and recovered can be repeatedly used.

As described above in detail, the present invention provides the process in accordance with which the hardly decomposable harmful substances contained in exhaust gas, waste waster and ash released into the natural environment from incineration apparatuses and manufacturing apparatuses and the hardly decomposable harmful substances accumulated in water and soil contaminated with these substances can be decomposed with enzymes having excellent stability or microorganisms producing the enzymes with excellent stability and made harmless.

Embodiments of the present process for decomposition include the process shown in the following:

A process for decomposing hardly decomposable harmful substances in soil contaminated with the hardly decomposable harmful substances comprising steps of:

(a) conducting isomer analysis of the hardly decomposable harmful substances and calculating the toxic equivalent (TEQ) per the unit amount of the contaminated soil;

(b) growing microorganisms having ability of decomposing the hardly decomposable harmful substances in the soil contaminated with the hardly decomposable harmful substances and selecting from the grown microorganisms a group of microorganisms having excellent ability of decomposing the hardly decomposable harmful substances which are specified in step (a);

(c) adding nutrients to promote growth of resident microorganisms present in the soil contaminated with the hardly decomposable harmful substances when the resident microorganisms have ability to decompose the hardly decomposable harmful substances;

(d) treating the soil for suppressing growth of resident microorganisms present in the soil contaminated with the hardly decomposable harmful substances and inoculating and promoting growth of microorganisms having the ability of decomposing the hardly decomposable harmful substances when the resident microorganisms suppress growth of the microorganisms having the ability of decomposing the hardly decomposable harmful substances;

(e) promoting decomposition of the hardly decomposable harmful substances with enzymes produced by the microorganisms having the ability of decomposing the hardly decomposable harmful substances; and

(f) adjusting conditions for growth of the microorganisms having the ability of decomposing the hardly decomposable harmful substances by monitoring amounts of the enzymes having the ability of decomposing the hardly decomposable harmful substances produced by the microorganisms and released into the soil.

In step (a), the isomer analysis of the hardly decomposable harmful substances is conducted and the toxic equivalent (TEQ) per the unit amount of the contaminated soil is calculated. The measurement of the hardly decomposable harmful substances in the contaminated soil can be conducted, for example, in accordance with the method described in "Standard Manual for Measurement of Dioxins in Industrial Waste Materials" published by Division of Living and Health, Ministry of Welfare, Japan, in February, 1997 or the method described in "Temporary Manual for Soil Investigation with respect to Dioxin" prepared by Environmental Protection Agency, Japan.

Based on the result of the measurement, the toxic equivalent showing the activity converted into the activity of 2,3,7,8-tetrachloro-dibenzo-p-dioxin is calculated. For the conversion factor in the calculation, the international toxic equivalent factor (I-TEF) is used. When the toxicity equivalent (TEQ) per the unit amount of the contaminated soil is known, the degree of danger to the human body due to the components contaminating the soil is known and the condition required for the treatment of the soil and the degree of urgency are clearly shown.

Then, in step (b), microorganisms having the ability of decomposing the hardly decomposable harmful substances are grown in the soil contaminated with the hardly decomposable harmful substances and a group of microorganisms having excellent ability of decomposing the specific hardly decomposable harmful substances which are specified based on the result in step (a) is selected from the microorganisms grown above. As described above, the microorganisms having the ability of decomposing the hardly decomposable substances include microorganisms belonging to various genera. In this step, the type of the microorganism which exhibits the most excellent fraction of decomposition to the specific hardly decomposable harmful substances contained in the soil for the treatment is selected from the microorganisms belonging to the various genera based on the results of the actual culture.

In the following step (c), when resident microorganisms present in the soil contaminated with the hardly decomposable harmful substances have ability to decompose the hardly decomposable harmful substances, nutrients are added to promote growth of the resident microorganisms. As the nutrient for promoting growth of the resident microorganisms having the ability of decomposing the hardly decomposable harmful substances, one or more compounds selected from the group consisting of lignin, veratryl alcohol, limonene, cinnamic aid and cinnamaldehyde or a substance containing these compounds is preferable. As the amount of the nutrient, about 1 to 10 g of lignin or veratryl alcohol or about 1 to 2 g of cinnamic acid or cinnamaldehyde is used per 1 liter of the soil for the treatment. By adding the nutrient, growth of the resident microorganism which is contained in the contaminated soil and have the ability of decomposing the hardly decomposable harmful substances, in particular, microorganisms producing peroxidase and laccase, is allowed to prevail over other microorganisms.

Even when resident microorganisms present in the soil contaminated with the hardly decomposable harmful substances have the ability of decomposing the hardly decomposable harmful substances, other resident microorganisms which adversely affects the growth of the microorganism having the ability of decomposing the hardly decomposable harmful substances may also be present in the soil. In such a case, it is effective that a treatment for suppressing growth of the microorganisms adversely affecting the growth of the desired microorganism is conducted and, thereafter, the microorganism having the ability of decomposing the hardly decomposable harmful substances is inoculate and grown.

For the treatment for suppressing growth of the resident microorganisms adversely affecting the growth of the microorganism having the ability of decomposing the hardly decomposable harmful substances, the degree of the adverse effect of the resident microorganisms, which are present in the contaminated soil for the treatment and the growth of which must be suppressed (referred to as the resident microorganisms, hereinafter), on the growth of the microorganism having the ability of decomposing the hardly decomposable harmful substances is evaluated based on the type and the number of the resident microorganisms. The treatment for suppressing growth of the resident microorganisms and the degree of application of the treatment can be suitably selected based on the result of the evaluation.

After the treatment for suppressing growth of the resident microorganisms living in the contaminated soil has been conducted, the microorganism having the ability of decomposing the hardly decomposing harmful substances is inoculated to the treated soil and the growth of the inoculated microorganism is promoted.

In step (e), decomposition of the hardly decomposable harmful substances with enzymes produced by the microorganisms having the ability of decomposing the hardly decomposable harmful substances is promoted. In this treatment, a surfactant, in particular, a nonionic surfactant is added. Among various nonionic surfactants, surfactants comprising as the main component one or more compounds selected from polyoxyethylene sorbitan monooleate, polyoxyethylene sorbitan monolaurate, polyoxyethylene sorbitan monopalmitate, polyoxyethylene sorbitan monostearate and polyoxyethylene sorbitan trioleate are preferable. The amount of the surfactant, as the amount of the pure substance, is 0.1 to 20 g and preferably 0.5 to 10 g per 1 liter of the contaminated soil. The addition of oleic acid, olive oil, linseed oil, fish oil or limonene also exhibits the effect of promoting the decomposition of the hardly decomposable harmful substances with the enzyme produced by the above microorganism.

In step (f), the amount of the enzyme having the ability of decomposing the hardly decomposable harmful substances produced by the microorganism and released into the soil is monitored and the condition for growth of the microorganisms having the ability of decomposing the hardly decomposable harmful substances is adjusted. The release of the enzyme having the ability of decomposing the hardly decomposable harmful substances into the contaminated soil can be monitored by measuring the concentration of the enzyme having the ability of decomposing the hardly decomposable harmful substances in the soil at a specified time interval during the period of growth of the above microorganism. When the concentration of the enzyme is low, the amount of the nutrients for the microorganisms or the surfactant is increased and the temperature of the contaminated soil and the content of water in the contaminated soil are adjusted. In this manner, the amount of the enzyme in the contaminated soil is kept great during the period of growth of the above microorganisms.

The present invention will be described more specifically with reference to examples in the following.

Example 1

(1) Culture of a microorganism having the ability of decomposing chlorinated dioxins

Into an Erlenmeyer flask having an inner volume of 1 liter, 180 g of barley as the nutrient was placed and then 100 ml of tap water was added into the flask. After the resultant mixture was left standing for 6 hours, the mixture was placed into an autoclave and sterilized at 121°C for 15 minute.

The content of the Erlenmeyer flask was then cooled to the room temperature and inoculated with a seed microorganism in an amount of one platinum microspoonful. The seed microorganism was obtained by growing Schizophyllum commune: IFO-6506 as the microorganism having the ability of decomposing chlorinated dioxins in an oat meal culture medium. The flask was placed standing at a temperature of 25°C and the microorganism was cultured for 30 days. As the result, the microorganism grew in the grains of barley.

(2) Decomposition of chlorinated dioxins in a contaminated soil

As the soil contaminated with chlorinated dioxins, 4 kg of red brown soil was used. To the soil, 100 g of corn bran, 100 g of rice bran, 50 g of chips of cherry trees and 50 g of chips of oak trees which had been sterilized at 121°C for 15 minutes in advance were added as the nutrients and mixed with the soil. While the soil and the nutrients were mixed together, tap water was added to the mixture and the content of water in the mixture was adjusted to 45% by weight.

The contaminated soil containing the nutrients and prepared above in an amount of 80 g was placed into a glass dish having a diameter of 16 cm and subjected to the heating treatment under the conditions of a temperature of 65°C and a time of 60 minutes.

To the contaminated soil which contained the nutrients and was subjected to the heating treatment, 20 grains of barley having Schizophyllum commune: IFO-6506 which was cultured in (1) described above was inoculated and mixed together. The glass dish containing the contaminated soil was placed into a plastic box covered with a cap so that vaporization of water was prevented and the plastic box was placed into an incubator kept at 25°C. The cap of the plastic box was opened once in 2 or 3 days so that the fresh air was introduced into the plastic box and the culture was continued for 30 days in this manner.

When the culture was completed, the chlorinated dioxins residual in the cultured material was extracted with toluene and quantitatively analyzed in accordance with the combination of the gas chromatography and the mass analysis (GC-MS). With respect to various chlorinated compounds found by the above analysis, the toxicity equivalent of each compound was obtained by multiplying the toxicity of the compound by the toxicity equivalent factor (TEF) which is the activity relative to the activity of 2,3,7,8-tetrachlorodibenzo-p-dioxin and decided as the international toxicity equivalent factor (I-TEF). The toxicity equivalent (TEQ) of the entire chlorinated dioxins as the toxicity corresponding to that of 2,3,7,8-tetrachlorodibenzo-p-dioxin was obtained from these values. The result is shown in Table 1.

Example 2

(1) Culture of a microorganism having the ability of decomposing chlorinated dioxins

The same procedures as those conducted in Example 1 (1) were conducted except that Trametes versicolor: IFO-4941 was used in place of Schizophyllum commune used in Example 1 (1).

(2) Decomposition of chlorinated dioxins in a contaminated soil

The same procedures as those conducted in Example 1 (2) were conducted except that grains of barley having the microorganism which were obtained in (1) described above were used in place of the grains of barley having the microorganism which were used in Example 1 (2). The result is shown in Table 1.

Example 3

(1) Culture of a microorganism having the ability of decomposing chlorinated dioxins

The same procedures as those conducted in Example 1 (1) were conducted except that Pleurotus pulmonaris: IFO-31345 was used in place of Schizophyllum commune used in Example 1 (1).

(2) Decomposition of chlorinated dioxins in a contaminated soil

The same procedures as those conducted in Example 1 (2) were conducted except that grains of barley having the microorganism which were obtained in (1) described above were used in place of the grains of barley having the microorganism which were used in Example 1 (2). The result is shown in Table 1.

Example 4

The same procedures as those conducted in Example 1 were conducted except that the time of the heating treatment described in Example 1 (2) was changed to 240 minutes. The result is shown in Table 1.

Example 5

The same procedures as those conducted in Example 2 were conducted except that the time of the heating treatment described in Example 2 (2) was changed to 240 minutes. The result is shown in Table 1.

Example 6

The same procedures as those conducted in Example 1 were conducted except that the time of the heating treatment described in Example 1 (2) was changed to 360 minutes. The result is shown in Table 1.

Example 7

The same procedures as those conducted in Example 2 were conducted except that the time of the heating treatment described in Example 2 (2) was changed to 360 minutes. The result is shown in Table 1.

Example 8

The same procedures as those conducted in Example 3 were conducted except that the time of the heating treatment described in Example 3 (2) was changed to 360 minutes. The result is shown in Table 1.

Example 9

The same procedures as those conducted in Example 1 were conducted except that the temperature of the heating treatment described in Example 1 (2) was changed to 75°C. The result is shown in Table 1.

Example 10

The same procedures as those conducted in Example 2 were conducted except that the temperature of the heating treatment described in Example 2 (2) was changed to 75°C. The result is shown in Table 1.

Example 11

The same procedures as those conducted in Example 3 were conducted except that the temperature of the heating treatment described in Example 3 (2) was changed to 75°C. The result is shown in Table 1.

Example 12

The same procedures as those conducted in Example 1 were conducted except that the temperature and the time of the heating treatment described in Example 1 (2) were changed to 75°C and 360 minutes, respectively. The result is shown in Table 1.

Example 13

The same procedures as those conducted in Example 2 were conducted except that the temperature and the time of the heating treatment described in Example 2 (2) were changed to 75°C and 360 minutes, respectively. The result is shown in Table 1.

Example 14

The same procedures as those conducted in Example 1 were conducted except that the temperature of the heating treatment described in Example 1 (2) was changed to 85°C. The result is shown in Table 1.

Example 15

The same procedures as those conducted in Example 2 were conducted except that the temperature of the heating treatment described in Example 2 (2) was changed to 85°C. The result is shown in Table 1.

Example 16

The same procedures as those conducted in Example 3 were conducted except that the temperature of the heating treatment described in Example 3 (2) was changed to 85°C. The result is shown in Table 1.

Example 17

The same procedures as those conducted in Example 1 were conducted except that the temperature and the time of the heating treatment described in Example 1 (2) were changed to 85°C and 360 minutes, respectively. The result is shown in Table 1.

Example 18

The same procedures as those conducted in Example 2 were conducted except that the temperature and the time of the heating treatment described in Example 2 (2) were changed to 85°C and 360 minutes, respectively. The result is shown in Table 1.

Example 19

The same procedures as those conducted in Example 1 were conducted except that the temperature of the heating treatment described in Example 1 (2) was changed to 95°C. The result is shown in Table 1.

Example 20

The same procedures as those conducted in Example 2 were conducted except that the temperature of the heating treatment described in Example 2 (2) was changed to 95°C. The result is shown in Table 1.

Example 21

The same procedures as those conducted in Example 3 were conducted except that the temperature of the heating treatment described in Example 3 (2) was changed to 95°C. The result is shown in Table 1.

Example 22

The same procedures as those conducted in Example 1 were conducted except that the temperature and the time of the heating treatment described in Example 1 (2) were changed to 95°C and 360 minutes, respectively. The result is shown in Table 1.

Example 23

The same procedures as those conducted in Example 2 were conducted except that the temperature and the time of the heating treatment described in Example 2 (2) were changed to 95°C and 360 minutes, respectively. The result is shown in Table 1.

Example 24

The same procedures as those conducted in Example 1 were conducted except that the contaminated soil was placed into a sealed container and subjected to the heating treatment under the conditions of a temperature of 121°C and a time of 15 minutes in place of the corresponding procedures conducted in Example 1 (2). The result is shown in Table 1.

Example 25

The same procedures as those conducted in Example 2 were conducted except that the contaminated soil was placed into a sealed container and subjected to the heat treatment under the conditions of a temperature of 121°C and a time of 15 minutes in place of the corresponding procedures conducted in Example 2 (2). The result is shown in Table 1.

Example 26

The same procedures as those conducted in Example 3 were conducted except that the contaminated soil was placed into a sealed container and subjected to the heat treatment under the conditions of a temperature of 121°C and a time of 15 minutes in place of the corresponding procedures conducted in Example 3 (2). The result is shown in Table 1.

Comparative Example 1

After the contaminated soil containing the nutrients which was prepared in Example 1 was kept at 25°C for 30 days without being subjected to the heating treatment, the amount of chlorinated dioxin was analyzed in accordance with the same procedures as those conducted in Example 1. The obtained result is shown in Table 1.

Table 1

|  | Temperature of heating | Time of heating | Microorganism | TEQ |
|---|---|---|---|---|
|  | (°C) | (minute) |  | (pg/g) |
| Example 1 | 65 | 60 | Schizophyllum commune (IFO-6505) | 2,560 |
| Example 2 | 65 | 60 | Trametes versicolor (IFO-4941) | 2,430 |
| Example 3 | 65 | 60 | Pleurotus pulmonaris (IFO-31345) | 2,580 |
| Example 4 | 65 | 240 | Schizophyllum commune (IFO-6505) | 2,550 |
| Example 5 | 65 | 240 | Trametes versicolor (IFO-4941) | 2,390 |
| Example 6 | 65 | 360 | Schizophyllum commune (IFO-6505) | 2,500 |
| Example 7 | 65 | 360 | Trametes versicolor (IFO-4941) | 2,410 |
| Example 8 | 65 | 360 | Pleurotus pulmonaris (IFO-31345) | 2,500 |
| Example 9 | 75 | 60 | Schizophyllum commune (IFO-6505) | 2,480 |
| Example 10 | 75 | 60 | Trametes versicolor (IFO-4941) | 2,380 |
| Example 11 | 75 | 60 | Pleurotus pulmonaris (IFO-31345) | 2,520 |
| Example 12 | 75 | 360 | Schizophyllum commune (IFO-6505) | 2,500 |
| Example 13 | 75 | 360 | Trametes versicolor (IFO-4941) | 2,400 |
| Example 14 | 85 | 60 | Schizophyllum commune (IFO-6505) | 2,380 |
| Example 15 | 85 | 60 | Trametes versicolor (IFO-4941) | 2,210 |
| Example 16 | 85 | 60 | Pleurotus pulmonaris (IFO-31345) | 2,330 |
| Example 17 | 85 | 360 | Schizophyllum commune (IFO-6505) | 2,310 |
| Example 18 | 85 | 360 | Trametes versicolor (IFO-4941) | 2,120 |
| Example 19 | 95 | 60 | Schizophyllum commune (IFO-6505) | 2,260 |
| Example 20 | 95 | 60 | Trametes versicolor (IFO-4941) | 2,010 |
| Example 21 | 95 | 60 | Pleurotus pulmonaris (IFO-31345) | 2,320 |
| Example 22 | 95 | 360 | Schizophyllum commune (IFO-6505) | 2,130 |
| Example 23 | 95 | 360 | Trametes versicolor (IFO-4941) | 1,940 |
| Example 24 | 121 | 15 | Schizophyllum commune (IFO-6505) | 1,850 |
| Example 25 | 121 | 15 | Trametes versicolor (IFO-4941) | 1,630 |
| Example 26 | 121 | 15 | Pleurotus pulmonaris (IFO-31345) | 2,020 |
| Comparative Example 1 | - | - | - | 2,890 |

Example 27

(1) Culture of a microorganism having the ability of decomposing chlorinated dioxins

Into a plastic bottle for sterilization having an inner volume of 300 ml, 100 g of corn bran as the nutrient was placed. After 130 ml of tap water was added into the bottle, the mixture was sterilized at 121°C for 15 minute.

The content of the plastic bottle for sterilization was then cooled to the room temperature and inoculated with a seed microorganism in an amount of one platinum microspoonful. The seed microorganism was obtained by growing Schizophyllum commune: IFO-6506 as the microorganism having the ability of decomposing chlorinated dioxins in an oat meal culture medium. The bottle was placed standing at a temperature of 25°C and the microorganism was cultured for one week. After the inoculation, the microorganism grew into such a condition that the microorganism was distributed in the entire portions of the culture and the growth of the microorganism was very active.

(2) Decomposition of chlorinated dioxins in a contaminated soil

As the soil contaminated with chlorinated dioxins, 1 kg of red brown soil was used. To the soil, 100 g of corn bran which was sterilized at 121°C for 15 minutes in advance was added as the nutrient and uniformly mixed with the soil. The contaminated soil containing the nutrient and prepared above in an amount of 80 g was placed into a glass dish having a diameter of 16 cm and 10 ml of ethyl alcohol was added as the agent for decreasing the content of miscellaneous other microorganisms. The glass dish was left standing in a clean bench for 24 hours.

To the glass dish containing the soil, 30 ml of sterilized water was added and mixed with the soil. Then, 1 g of the seed of Schizophyllum commune: IFO-6506 which was cultured in (1) described above was added and mixed with the soil. The glass dish containing the contaminated soil was placed into a plastic box covered with a cap so that vaporization of water could be prevented and the plastic box was placed into an incubator kept at a temperature of 25°C. The cap of the plastic box was opened once in 2 or 3 days so that the fresh air was introduced into the plastic box and the culture was continued for 30 days in this manner.

When the culture was completed, the chlorinated dioxins extracted with toluene from the culture was quantitatively analyzed in accordance with the same method as that used in Example 1 (2) and the toxicity equivalent (TEQ) corresponding to that of 2,3,7,8-tetrachlorodibenzo-p-dioxin was obtained. The result is shown in Table 2.

Example 28

The same procedures as those conducted in Example 27 were conducted except that Trametes versicolor: IFO-4941 was used in place of the microorganism used in Example 27 (2). The result is shown in Table 2.

Example 29

The same procedures as those conducted in Example 27 were conducted except that Pleurotus pulmonaris: IFO-31345 was used in place of the microorganism used in Example 27 (2). The result is shown in Table 2.

Example 30

The same procedures as those conducted in Example 27 were conducted except that the amount of ethyl alcohol used in Example 27 (2) as the agent for decreasing the content of miscellaneous other microorganisms was changed to 8.5 ml. The result is shown in Table 2.

Example 31

The same procedures as those conducted in Example 28 were conducted except that the amount of ethyl alcohol used in Example 28 as the agent for decreasing the content of miscellaneous other microorganisms was changed to 8.5 ml. The result is shown in Table 2.

Example 32

The same procedures as those conducted in Example 27 were conducted except that the amount of ethyl alcohol used in Example 27 (2) as the agent for decreasing the content of miscellaneous other microorganisms was changed to 7.5 ml. The result is shown in Table 2.

Example 33

The same procedures as those conducted in Example 28 were conducted except that the amount of ethyl alcohol used in Example 28 as the agent for decreasing the content of miscellaneous other microorganisms was changed to 7.5 ml. The result is shown in Table 2.

Example 34

The same procedures as those conducted in Example 27 were conducted except that the amount of ethyl alcohol used in Example 27 (2) as the agent for decreasing the content of miscellaneous other microorganisms was changed to 6.0 ml. The result is shown in Table 2.

Example 35

The same procedures as those conducted in Example 28 were conducted except that the amount of ethyl alcohol used in Example 28 as the agent for decreasing the content of miscellaneous other microorganisms was changed to 6.0 ml. The result is shown in Table 2.

Example 36

The same procedures as those conducted in Example 29 were conducted except that the amount of ethyl alcohol used in Example 29 as the agent for decreasing the content of miscellaneous other microorganisms was changed to 6.0 ml. The result is shown in Table 2.

Example 37

The same procedures as those conducted in Example 27 were conducted except that the amount of ethyl alcohol used in Example 27 (2) as the agent for decreasing the content of miscellaneous other microorganisms was changed to 3.0 ml. The result is shown in Table 2.

Example 38

The same procedures as those conducted in Example 28 were conducted except that the amount of ethyl alcohol used in Example 28 as the agent for decreasing the content of miscellaneous other microorganisms was changed to 3.0 ml. The result is shown in Table 2.

Example 39

The same procedures as those conducted in Example 30 were conducted except that a 90% by volume aqueous solution of ethyl alcohol was used as the agent for decreasing the content of miscellaneous other microorganisms in place of ethyl alcohol used in Example 30. The result is shown in Table 2.

Example 40

The same procedures as those conducted in Example 31 were conducted except that a 90% by volume aqueous solution of ethyl alcohol was used as the agent for decreasing the content of miscellaneous other microorganisms in place of ethyl alcohol used in Example 31. The result is shown in Table 2.

Example 41

The same procedures as those conducted in Example 27 were conducted except that a 70% by volume aqueous solution of ethyl alcohol was used as the agent for decreasing the content of miscellaneous other microorganisms in place of ethyl alcohol used in Example 27. The result is shown in Table 2.

Example 42

The same procedures as those conducted in Example 28 were conducted except that a 70% by volume aqueous solution of ethyl alcohol was used as the agent for decreasing the content of miscellaneous other microorganisms in place of ethyl alcohol used in Example 28. The result is shown in Table 2.

Comparative Example 2

The same procedures as those conducted in Example 27 were conducted except that ethyl alcohol used in Example 27 (2) was not used and the inoculation of a seed of a microorganism conducted in Example 27 (2) was not conducted. The result is shown in Table 2.

Table 2

| | Concentration of ethyl alcohol | Amount of ethyl alcohol | Microorganism | TEQ |
|---|---|---|---|---|
| | (W/V%) | (ml) | | (pg/g) |
| Example 27 | 100 | 10.0 | Schizophyllum commune (IFO-6505) | 1,230 |
| Example 28 | 100 | 10.0 | Trametes versicolor (IFO-4941) | 1,190 |
| Example 29 | 100 | 10.0 | Pleurotus pulmonaris (IFO-31345) | 1,320 |
| Example 30 | 100 | 8.5 | Schizophyllum commune (IFO-6505) | 1,210 |
| Example 31 | 100 | 8.5 | Trametes versicolor (IFO-4941) | 1,320 |
| Example 32 | 100 | 7.5 | Schizophyllum commune (IFO-6505) | 1,330 |
| Example 33 | 100 | 7.5 | Trametes versicolor (IFO-4941) | 1,270 |
| Example 34 | 100 | 6.0 | Schizophyllum commune (IFO-6505) | 1,480 |
| Example 35 | 100 | 6.0 | Trametes versicolor (IFO-4941) | 1,380 |
| Example 36 | 100 | 6.0 | Pleurotus pulmonaris (IFO-31345) | 1,510 |
| Example 37 | 100 | 3.0 | Schizophyllum commune (IFO-6505) | 1,590 |
| Example 38 | 100 | 3.0 | Trametes versicolor (IFO-4941) | 1,490 |
| Example 39 | 90 | 8.5 | Schizophyllum commune (IFO-6505) | 1,360 |
| Example 40 | 90 | 8.5 | Trametes versicolor (IFO-4941) | 1,280 |
| Example 41 | 70 | 10.0 | Schizophyllum commune (IFO-6505) | 1,410 |
| Example 42 | 70 | 10.0 | Trametes versicolor (IFO-4941) | 1,310 |
| Comparative Example 2 | - | - | - | 1,690 |

Example 43

(1) Culture of a microorganism having the ability of decomposing chlorinated dioxins

In accordance with the same procedures as those conducted in Example 1(1), Schizophyllum commune: IFO-6506 was cultured.

(2) Decomposition of chlorinated dioxins in a contaminated soil

As the soil contaminated with chlorinated dioxins, 1 kg of red brown soil was used. To the soil, 100 g of corn bran which was sterilized at 121°C for 15 minutes in advance was added as the nutrients and uniformly mixed with the soil. The contaminated soil containing the nutrients and prepared above in an amount of 50 g was placed into a glass dish having a diameter of 16 cm and 8 ml of a 30% by weight aqueous solution of hydrogen peroxide was added as the agent for decreasing the content of miscellaneous other microorganisms. The glass dish was left standing in a clean bench for 8 hours.

To the glass dish containing the contaminated soil which had been subjected to the chemical treatment, 20 grains of wheat having Schizophyllum commune: IFO-6506 which was cultured in (1) described above was added and mixed with the soil. The glass dish containing the soil was covered with a cap and placed into a plastic box covered with a cap so that vaporization of water could be prevented and the plastic box was placed into an incubator kept at a temperature of 25°C. The cap of the plastic box was opened once in 2 or 3 days so that the fresh air was introduced into the plastic box and the culture was continued for 30 days in this manner.

When the culture was completed, the chlorinated dioxins extracted with toluene from the culture was quantitatively analyzed in accordance with the same method as that used in Example 1 (2) and the toxicity equivalent (TEQ) corresponding to 2,3,7,8-tetrachlorodibenzo-p-dioxin was obtained. The result is shown in Table 3.

Example 44

The same procedures as those conducted in Example 43 were conducted except that Trametes versicolor: IFO-04941 was used in place of the microorganism used in Example 43 (2). The result is shown in Table 3.

Example 45

The same procedures as those conducted in Example 43 were conducted except that the amount of the aqueous solution of hydrogen peroxide described in Example 43 was changed to 4 ml. The result is shown in Table 3.

Example 46

The same procedures as those conducted in Example 44 were conducted except that the amount of the aqueous solution of hydrogen peroxide described in Example 44 was changed to 4 ml. The result is shown in Table 3.

Example 47

The same procedures as those conducted in Example 43 were conducted except that the amount of the aqueous solution of hydrogen peroxide described in Example 43 was changed to 2 ml. The result is shown in Table 3.

Example 48

The same procedures as those conducted in Example 44 were conducted except that the amount of the aqueous solution of hydrogen peroxide described in Example 44 was changed to 2 ml. The result is shown in Table 3.

Example 49

The same procedures as those conducted in Example 43 were conducted except that 1.5 g of calcium hypochlorite was added in place of the aqueous solution of hydrogen peroxide used in Example 43. The result is shown in Table 3.

Example 50

The same procedures as those conducted in Example 44 were conducted except that 1.5 g of calcium hypochlorite was added in place of the aqueous solution of hydrogen peroxide used in Example 44. The result is shown in Table 3.

Example 51

The same procedures as those conducted in Example 43 were conducted except that 1.0 g of calcium hypochlorite was added in place of the aqueous solution of hydrogen peroxide used in Example 43. The result is shown in Table 3.

Example 52

The same procedures as those conducted in Example 44 were conducted except that 1.0 g of calcium hypochlorite was added in place of the aqueous solution of hydrogen peroxide used in Example 44. The result is shown in Table 3.

Example 53

The same procedures as those conducted in Example 43 were conducted except that 0.5 g of calcium hypochlorite was added in place of the aqueous solution of hydrogen peroxide used in Example 43. The result is shown in Table 3.

Example 54

The same procedures as those conducted in Example 44 were conducted except that 0.5 g of calcium hypochlorite was added in place of the aqueous solution of hydrogen peroxide used in Example 44. The result is shown in Table 3.

Example 55

The same procedures as those conducted in Example 43 were conducted except that 0.2 g of veratryl alcohol was added in place of the aqueous solution of hydrogen peroxide used in Example 43. The result is shown in Table 3.

Example 56

The same procedures as those conducted in Example 44 were conducted except that 0.2 g of veratryl alcohol was added in place of the aqueous solution of hydrogen peroxide used in Example 44. The result is shown in Table 3.

Example 57

The same procedures as those conducted in Example 43 were conducted except that 1.0 g of limonene was added in place of the aqueous solution of hydrogen peroxide used in Example 43. The result is shown in Table 3.

Example 58

The same procedures as those conducted in Example 44 were conducted except that 1.0 g of limonene was added in place of the aqueous solution of hydrogen peroxide used in Example 44. The result is shown in Table 3.

Example 59

The same procedures as those conducted in Example 43 were conducted except that 2.0 g of limonene was added in place of the aqueous solution of hydrogen peroxide used in Example 43. The result is shown in Table 3.

Example 60

The same procedures as those conducted in Example 44 were conducted except that 2.0 g of limonene was added in place of the aqueous solution of hydrogen peroxide used in Example 44. The result is shown in Table 3.

Example 61

The same procedures as those conducted in Example 43 were conducted except that 3.0 g of limonene was added in place of the aqueous solution of hydrogen peroxide used in Example 43. The result is shown in Table 3.

Example 62

The same procedures as those conducted in Example 44 were conducted except that 3.0 g of limonene was added in place of the aqueous solution of hydrogen peroxide used in Example 44. The result is shown in Table 3.

Comparative Example 3

The same procedures as those conducted in Example 43 were conducted except that the aqueous solution of hydrogen peroxide used in Example 43 as the agent for decreasing the content of miscellaneous other microorganisms was not used. The result is shown in Table 3.

Comparative Example 4

The same procedures as those conducted in Example 44 were conducted except that the aqueous solution of hydrogen peroxide used in Example 44 as the agent for decreasing the content of miscellaneous other microorganisms was not used. The result is shown in Table 3.

Table 3 - 1

|  | Agent for decreasing content of miscellaneous other microorganisms | Microorganism | TEQ |
|---|---|---|---|
|  | (amount) |  | (pg/g) |
| Example 43 | aq. soln. of $H_2O_2$ (30%) (8 ml) | Schizophyllum commune (IFO-6505) | 1,990 |
| Example 44 | aq. soln. of $H_2O_2$ (30%) (8 ml) | Trametes versicolor (IFO-4941) | 1,980 |
| Example 45 | aq. soln. of $H_2O_2$ (30%) (4 ml) | Schizophyllum commune (IFO-6505) | 2,080 |
| Example 46 | aq. soln. of $H_2O_2$ (30%) (4 ml) | Trametes versicolor (IFO-4941) | 2,140 |
| Example 47 | aq. soln. of $H_2O_2$ (30%) (2 ml) | Schizophyllum commune (IFO-6505) | 2,060 |
| Example 48 | aq. soln. of $H_2O_2$ (30%) (2 ml) | Trametes versicolor (IFO-4941) | 2,360 |
| Example 49 | calcium hypochlorite (1.5 g) | Schizophyllum commune (IFO-6505) | 2,340 |
| Example 50 | calcium hypochlorite (1.5 g) | Trametes versicolor (IFO-4941) | 2,160 |
| Example 51 | calcium hypochlorite (1.0 g) | Schizophyllum commune (IFO-6505) | 2,410 |
| Example 52 | calcium hypochlorite (1.0 g) | Trametes versicolor (IFO-4941) | 2,280 |
| Example 53 | calcium hypochlorite (0.5 g) | Schizophyllum commune (IFO-6505) | 2,470 |
| Example 54 | calcium hypochlorite (0.5 g) | Trametes versicolor (IFO-4941) | 2,490 |
| Example 55 | veratryl alcohol (0.5 g) | Schizophyllum commune (IFO-6505) | 2,200 |
| Example 56 | veratryl alcohol (0.5 g) | Trametes versicolor (IFO-4941) | 2,190 |

Table 3 - 2

|  | Agent for decreasing content of miscellaneous other microorganisms | Microorganism | TEQ |
|---|---|---|---|
|  | (amount) |  | (pg/g) |
| Example 57 | limonene (1.0 g) | Schizophyllum commune (IFO-6505) | 2,380 |
| Example 58 | limonene (1.0 g) | Trametes versicolor (IFO-4941) | 2,420 |
| Example 59 | limonene (2.0 g) | Schizophyllum commune (IFO-6505) | 2,210 |
| Example 60 | limonene (2.0 g) | Trametes versicolor (IFO-4941) | 2,370 |
| Example 61 | limonene (3.0 g) | Schizophyllum commune (IFO-6505) | 2,190 |
| Example 62 | limonene (3.0 g) | Trametes versicolor (IFO-4941) | 2,140 |
| Comparative Example 3 | - | Schizophyllum commune (IFO-6505) | 2,730 |
| Comparative Example 4 | - | Trametes versicolor (IFO-4941) | 2,810 |

Example 63

(1) Culture of a microorganism having the ability of decomposing chlorinated dioxins

In accordance with the same procedures as those conducted in Example 27 (1), Schizophyllum commune: IFO-6506 was cultured.

(2) Decomposition of chlorinated dioxins in a contaminated soil

As the soil contaminated with chlorinated dioxins, 1 kg of red brown soil was used. To the soil, 100 g of corn bran which was sterilized at 121°C for 15 minutes in advance was added as the nutrient and uniformly mixed with the soil. To the contaminated soil containing the nutrient and prepared above in an amount of 80 g, 30 ml of tap water was added and mixed with the soil. The resultant mixture was placed into a glass dish having a diameter of 18 cm and subjected to the heating treatment at 75°C for 1 hour.

After the contaminated soil subjected to the heating treatment was left standing in a clean bench for 16 hours, 8.5 ml of ethyl alcohol as the agent for decreasing the content of miscellaneous other microorganisms was added and the resultant mixture was left standing in a clean bench for 24 hours.

To the contaminated soil which had been subjected to the heating treatment and the chemical treatment as described above, 1 g of the seed microorganisms of Schizophyllum commune: IFO-6506 which was cultured in (1) described above was inoculated. The glass dish containing the contaminated soil was covered with a cap and placed into a plastic box covered with a cap and the plastic box was placed into an incubator kept at a temperature of 25°C. The cap of the plastic box was opened once in 2 or 3 days so that the fresh air was introduced into the plastic box and the culture was continued for 30 days in this manner.

When the culture was completed, the chlorinated dioxins extracted with toluene from the culture was quantitatively analyzed in accordance with the same method as that used in Example 1 (2) and the toxicity equivalent (TEQ) corresponding to 2,3,7,8-tetrachlorodibenzo-p-dioxin was obtained. The result is shown in Table 4.

Example 64

The same procedures as those conducted in Example 63 were conducted except that the temperature of the heat treatment conducted in Example 63 was changed to 85°C. The result is shown in Table 4.

Example 65

The same procedures as those conducted in Example 63 were conducted except that the amount of ethyl alcohol used in Example 63 was changed to 2.5 ml. The result is shown in Table 4.

Comparative Example 5

The same procedures as those conducted in Example 63 were conducted except that neither the heating treatment nor the chemical treatment was conducted. The result is shown in Table 4.

Example 66

(1) Culture of a microorganism having the ability of decomposing chlorinated dioxins

In accordance with the same procedures as those conducted in Example 1 (1), Schizophyllum commune: IFO-6505 was cultured.

(2) Decomposition of chlorinated dioxins in a contaminated soil

As the soil contaminated with chlorinated dioxins, 1 kg of red brown soil was used. To the soil, a mixture of 200 g of corn bran which was sterilized at 121°C for 15 minutes in advance and 200 g of rinds of Citrus natsudaidai Hayata cut to a size of 5 mm or smaller was added as the nutrients and uniformly mixed with the soil. The contaminated soil containing the nutrients and prepared above in an amount of 80 g was placed into a glass dish having a diameter of 16 cm and subjected to the heating treatment at 85°C for 1 hour in an autoclave.

After the contaminated soil subjected to the heating treatment was left standing in a clean bench for 16 hours, 20 ml of a mixed solution prepared from 10 ml of a 1% (w/v) aqueous solution of hydrogen peroxide and 90 ml of ethyl alcohol as the agent for decreasing the content of miscellaneous other microorganisms was sprayed to the surface of the contaminated soil in the glass dish which had been subjected to the heating treatment. Then, the dish was left standing in a clean bench for 3 hours without a cap.

To the contaminated soil which had been subjected to the heating treatment and the chemical treatment as described above, 20 grains of barley having Schizophyllum commune: IFO-6506 which was cultured in (1) described above was inoculated. The glass dish containing the contaminated soil was covered with a cap and placed into a plastic box covered with a cap and the plastic box was placed into an incubator kept at a temperature of 25°C. The cap of the plastic box was opened once in 2 or 3 days so that the fresh air was introduced into the plastic box and the culture was continued for 30 days in this manner.

When the culture was completed, the chlorinated dioxins extracted with toluene from the culture was quantitatively analyzed in accordance with the same method as that used in Example 1 (2) and the toxicity equivalent (TEQ) corresponding to 2,3,7,8-tetrachlorodibenzo-p-dioxin was obtained. The result is shown in Table 4.

Example 67

The same procedures as those conducted in Example 66 were conducted except that Trametes versicolor: IFO-04941 was used in place of Schizophyllum commune: IFO-6506 inoculated in Example 66. The result is shown in Table 4.

Example 68

The same procedures as those conducted in Example 66 were conducted except that Pleurotus pulmonaris: IFO-31345 was used in place of Schizophyllum commune: IFO-6506 inoculated in Example 66. The result is shown in Table 4.

Comparative Example 6

The same procedures as those conducted in Example 66 were conducted except that neither the heating treatment nor the inoculation with Schizophyllum commune: IFO-6506 conducted in Example 66 was conducted. The result is shown in Table 4.

Table 4

| | Temperature / time of heat treatment, Agent for decreasing content of miscellaneous other microorganisms | Microorganism | TEQ |
|---|---|---|---|
| | | | (pg/g) |
| Example 63 | 75°C / 1 hour ethyl alcohol | Schizophyllum commune (IFO-6505) | 1,090 |
| Example 64 | 85°C / 1 hour ethyl alcohol (8.5 ml) | Schizophyllum commune (IFO-6505) | 1,020 |
| Example 65 | 85°C / 1 hour ethyl alcohol (2.5 ml) | Schizophyllum commune (IFO-6505) | 1,450 |
| Comparative Example 5 | - - | Schizophyllum commune (IFO-6505) | 1,720 |
| Example 66 | 85°C / 1 hour ethyl alcohol + aq. soln. of $H_2O_2$ | Schizophyllum commune (IFO-6505) | 2,120 |
| Example 67 | 85°C / 1 hour ethyl alcohol + aq. soln. of $H_2O_2$ | Trametes versicolor (IFO-4941) | 1,960 |
| Example 68 | 85°C / 1 hour ethyl alcohol + aq. soln. of $H_2O_2$ | Pleurotus pulmonaris (IFO-31345) | 2,320 |
| Comparative Example 6 | - - | - | 2,860 |

Example 69

pH of waste water discharged from a process for producing pulp in which the water was used in a bleaching step with chlorine (the concentration of dioxins: 120 pg-TEQ/liter; the concentration of hypochlorous acid: 17 ppm; and the concentration of hypochlorous ion: 14 ppm) was adjusted to 7. The waste water in an amount of 10 liters was placed into a glass bottle and 10 g of sodium sulfite was added to the bottle. The resultant mixture was stirred for 1 hour and sterilized at 121°C for 20 minutes.

The sterilized waste water in an amount of 500 ml was placed into an Erlenmeyer flask having a volume of 2 liters. To the waste water, 2 g of laccase (derived from Trametes versicolor; the activity: 14 units/g) was added and the decomposition reaction was conducted at 40°C for 4 hours.

As the result, the TEQ fraction of decomposition was 95%.

The TEQ fraction of decomposition of a dioxin was calculated in accordance with the following equation:

$$\text{TEQ fraction of decomposition (\%)} = [(A-B)/A] \times 100$$

wherein

A: the amount of the residual dioxin when neither a microorganism nor an enzyme was added,
B: the amount of the residual dioxin when a microorganism or an enzyme was added,

Comparative Example 7

The same procedures as those conducted in Example 69 were conducted except that sodium sulfite was not added to the waste water and the sterilization treatment was not conducted.

As the result, the TEQ fraction of decomposition was 5%.

Example 70

pH of waste water discharged from a process for producing pulp was adjusted, sodium sulfite was added and the waste water was sterilized in accordance with the same procedures as those conducted in Example 69.

Then, to the sterilized waste water, 20 g/liter of powder of a culture medium of oat meal as the nutrient was added and Schizophyllum commune: IFO-6505 was added as the microorganism. The obtained mixture was left standing at 27°C for 2 weeks for the culture and the decomposition reaction was allowed to proceed.

As the result, the TEQ fraction of decomposition was 89%.

Example 71

The same procedures as those conducted in Example 70 were conducted except that sodium sulfate was not added to the waste water discharged from a process for producing pulp.

As the result, the TEQ fraction of decomposition was 88%.

Comparative Example 8

The same procedures as those conducted in Example 70 were conducted except that the waste water discharged from a process for producing pulp was not sterilized.

As the result, the TEQ fraction of decomposition was 3%.

Comparative Example

The same procedures as those conducted in Example 70 were conducted except that sodium sulfite was not added to the waste water discharged from a process for producing pulp and the waste water was not sterilized.

As the result, the TEQ fraction of decomposition was 5%.

Example 72

Waste water from a manufacturing plant containing 52 ppm of hypochlorous acid, 71 ppm of hypochlorous ion, 3,250 pg-TEQ/liter of dioxins and $2.1 \times 10^8$ of microorganisms was sterilized at 121°C for 20 minutes. To the sterilized waste water, 1 g of ammonium carbonate and 2 g of sodium sulfite were added and the resultant mixture was stirred in a thermostatted bath at 40°C for 1 hour. To this waste water, 40 units/liter of laccase and 0.1 g of 1-hydroxybenzotriazole were added and the resultant solution was stirred at 40°C for 30 minutes. Then, the reaction was stopped by adjusting pH to 1 by adding sulfuric acid. The entire amount was subjected to extraction with toluene and the extract was analyzed with respect to dioxins. As the result, the fraction of decomposition of dioxins was 92%.

Comparative Example 10

The same procedures as those conducted in Example 72 were conducted except that neither ammonium carbonate nor sodium sulfite was added and the sterilization was not conducted. As the result, the fraction of decomposition of dioxins was 0.

Example 73 to 75 and Comparative Example 11

The process of the present invention was conducted in accordance with the following steps.

In an area around an incineration plant for city garbage where weeds grew, a sample of soil was taken from a portion of the land ranging from the surface to a depth of 20 cm as the sample of soil contaminated with chlorinated dioxins.

The sample of the soil contaminated with chlorinated dioxins was analyzed with respect to isomers of chlorinated dioxins in accordance with the temporary manual for investigation of soil with respect to chlorinated dioxins which was prepared by the Environmental Protection Agency of Japan.

As the result of the analysis, it was confirmed that 2,3,7,8-tetrachlorodibenzo-p-dioxin, 1,2,3,7,8-pentachlorodibenzo-p-dioxin, 1,2,3,4,7,8-hexachlorodibenzo-p-dioxin, 1,2,3,6,7,8-hexachlorodibenzo-p-dioxin, 1,2,3,7,8,9-hexachlorodibenzo-p-dioxin, 1,2,3,4,6,7,8-heptachloro-dibenzo-p-dioxin, 1,2,3,4,6,7,8,9-octachlorodibenzo-p-dioxin, 2,3,7,8-tetrachlorodibenzofuran, 1,2,3,7,8-pentachlorodibenzofuran, 2,3,4,7,8-pentachlorodibenzofuran, 1,2,3,4,7,8-hexachlorodibenzofuran, 1,2,3,6,7,8-hexachlorodibenzofuran, 1,2,3,7,8,9-hexachlorodibenzofuran, 2,3,4,6,7,8-hexachlorodibenzofuran, 1,2,3,4,6,7,8-heptachlorodibenzofuran, 1,2,3,4,7,8,9-heptachlorodibenzofuran and 1,2,3,4,6,7,8-octachloro-dibenzofuran were present as the isomers of chlorinated dioxins.

The content of each chlorinated dioxin was calculated as the toxicity equivalent (TEQ) corresponding to the activity of 2,3,7,8-tetrachloro-dibenzo-p-dioxin. The value of TEQ of the entire chlorinated dioxins present in the above contaminated soil was 2,800 picograms/g of the soil.

A preliminary step: The above soil contaminated with chlorinated dioxins was dried until the content of water became 10% by weight. The dried soil contaminated with chlorinated dioxins in an amount of 1 kg was taken and placed into a stainless steel vat having a volume of 5 liters.

Step (i): To the soil placed in the tray, calcium oxide was added in an amount shown in Table 5. The resulting mixture was stirred for mixing and the temperature at the central portion of the soil was measured as heat was generated. The stainless steel tray was placed into a container having an inner volume of 10 liters and thermally insulated with a foamed polystyrene resin.

Step (ii): To the contaminated soil, 200 g of water was added and quickly mixed. The tray was covered with a cap made of a foamed polystyrene resin.

Step (ii'): The temperature at the central portion of the above contaminated soil was measured from time to time while the soil was left standing. When the temperature was lowered to 40°C or lower, 1 N sulfuric acid was added and pH was adjusted to 7.

Step (iii): To the above contaminated soil, 100 g of an agent of a microorganism (the content of water: 65% by weight) which was prepared by culturing Schizophyllum commune: IFO-6505 in a solid culture medium containing 50% by weight of corn bran and 50% by weight of saw dust of oak was added.

Finishing step: The contaminated soil mixed with the agent of a microorganism was left standing without placing the cap made of a foamed polystyrene. Once in 3 days, the soil was mixed together and the content of water was measured using an infrared meter of the content of water. Tap water was added so that the content of water was kept at 30% by weight or greater.

After the soil was treated as described above for 30 days, the soil was analyzed with respect to the isomers of chlorinated dioxins and TEQ was calculated. The fraction of the decrease in TEQ of the chlorinated dioxins relative to the value before the addition of the microorganism was calculated and used as the fraction of decomposition of the chlorinated dioxins. The results are shown in Table 5.

Table 5

|  | Amount of calcium oxide | Temperature of heated soil | Fraction of decomposition of dioxins |
|---|---|---|---|
|  | (g) | (°C) | (%) |
| Example 73 | 50 | 67 | 43 |
| Example 74 | 100 | 93 | 52 |
| Example 75 | 150 | 97 | 49 |

Table 5 (continued)

|  | Amount of calcium oxide | Temperature of heated soil | Fraction of decomposition of dioxins |
|---|---|---|---|
|  | (g) | (°C) | (%) |
| Comparative Example 11 | 0 | 27* | 8 |

* In Comparative Example 11, calcium oxide was not added. Therefore, the temperature of heated soil shows the temperature of soil without heat generation.

As shown in Table 5, high fractions of decomposition of dioxins were obtained in Examples 73 to 75. In contrast, the fraction of decomposition of dioxins was extremely small in Comparative Example 11 in which calcium oxide was not added.

Example 76

Cleaning of soil was conducted in accordance with the same procedures as those conducted in Examples 73 to 75 except that soil contaminated with halogenated phenols, i.e., soil contaminated with 1.2 μg of dichlorophenol and 1.7 μg of pentachlorophenol per 1 g of the soil, was used in place of the soil contaminated with the chlorinated dioxins; in step (i), calcium oxide was used in an amount of 110 g; in step (ii'), pH was adjusted to 6.5; and in step (iii), Pleurotus pulmonaris: IFO-31345 was used as the microorganism.
After the soil was treated as described above for 30 days, the fractions of the decrease in the contents of the halogenated phenols in the soil relative to the values before the addition of the microorganism were calculated and used as the fractions of decomposition of the halogenated phenols. The results are shown in Table 6.

Example 77

Cleaning of soil was conducted in accordance with the same procedures as those conducted in Example 76 except that Pycnoporus coccineus: IFO-4923 was used as the microorganism. After the soil was treated as described above for 30 days, the fractions of the decrease in the contents of the halogenated phenols in the soil relative to the values before the addition of the microorganism were calculated and used as the fractions of decomposition of the halogenated phenols. The results are shown in Table 6.

Example 78

Cleaning of soil was conducted in accordance with the same procedures as those conducted in Example 76 except that Trametes versicolor pulmonaris: IFO-30388 was used as the microorganism. After the soil was treated as described above for 30 days, the fractions of the decrease in the contents of the halogenated phenols in the soil relative to the values before the addition of the microorganism were calculated and used as the fractions of decomposition of the halogenated phenols. The results are shown in Table 6.

Table 6

|  | Microorganism | Amount of calcium oxide | Temperature of heated soil | Fraction of decomposition of halogenated phenol | |
|---|---|---|---|---|---|
|  |  |  |  | dichlorophenol | pentachlorophenol |
|  |  | (g) | (°C) | (%) | (%) |
| Example 76 | Pleurotus pulmonaris | 110 | 93 | 76 | 61 |
| Example 77 | Pycnoporus coccineus | 110 | 91 | 70 | 62 |
| Example 78 | Trametes versicolor | 110 | 94 | 89 | 69 |

Example 79 to 81

Cleaning of soil was conducted in accordance with the same procedures as those conducted in Examples 73

**EP 1 238 718 A1**

to 75 except that iron powder was used in place of calcium oxide and pH was not adjusted in step (ii'). The results of the analysis conducted in accordance with the same method as that in Examples 73 to 75 are shown in Table 7.

Table 7

| | Amount of iron powder | Temperature of heated soil | Fraction of decomposition of dioxins |
|---|---|---|---|
| | (g) | (°C) | (%) |
| Example 79 | 50 | 80 | 40 |
| Example 80 | 100 | 99 | 55 |
| Example 81 | 150 | 103 | 55 |

Examples 82 to 84

Cleaning of soil was conducted in accordance with the same procedures as those conducted in Examples 76 to 78 except that 100 g of iron powder was used in place of 110 g of calcium oxide and pH was not adjusted in step (ii'). The results of the analysis conducted in accordance with the same method as that in Examples 76 to 78 are shown in Table 8.

Table 8

| | Microorganism | Amount of iron powder | Temperature of heated soil | Fraction of decomposition of halogenated phenol | |
|---|---|---|---|---|---|
| | | | | dichlorophenol | pentachlorophenol |
| | | (g) | (°C) | (%) | (%) |
| Example 82 | Pleurotus pulmonaris | 100 | 99 | 70 | 60 |
| Example 83 | Pycnoporus coccineus | 100 | 99 | 65 | 62 |
| Example 84 | Trametes versicolor | 100 | 97 | 90 | 66 |

Example 85

(1) Analysis of soil contaminated with chlorinated dioxins

An area around an incineration plant for city garbage built at a forested mountainous location was selected. In the area where weeds grew, a sample of soil was taken from a portion of the land ranging from the surface to a depth of 20 cm as the sample of soil contaminated with chlorinated dioxins. The soil was treated by a metal screen having an opening of 1 cm so that miscellaneous foreign materials such as stones were removed and the obtained soil was used as a sample of the soil contaminated with chlorinated dioxins.

The sample of the soil contaminated with chlorinated dioxins was analyzed with respect to isomers of chlorinated dioxins in accordance with the temporary manual for investigation of soil with respect to chlorinated dioxins which was prepared by the Environmental Protection Agency of Japan.

As the result of the analysis, it was confirmed that 2,3,7,8-tetrachlorodibenzo-p-dioxin, 1,2,3,7,8-pentachlorodibenzo-p-dioxin, 1,2,3,4,7,8-hexachlorodibenzo-p-dioxin, 1,2,3,6,7,8-hexachlorodibenzo-p-dioxin, 1,2,3,7,8,9-hexachlorodibenzo-p-dioxin, 1,2,3,4,6,7,8-heptachloro-dibenzo-p-dioxin, 1,2,3,4,6,7,8,9-octachlorodibenzo-p-dioxin, 2,3,7,8-tetrachlorodibenzofuran, 1,2,3,7,8-pentachlorodibenzofuran, 2,3,4,7,8-pentachlorodibenzofuran, 1,2,3,4,7,8-hexachlorodibenzofuran, 1,2,3,6,7,8-hexachlorodibenzofuran, 1,2,3,7,8,9-hexachlorodibenzofuran, 2,3,4,6,7,8-hexachlorodibenzofuran, 1,2,3,4,6,7,8-heptachlorodibenzofuran, 1,2,3,4,7,8,9-heptachlorodibenzofuran and 1,2,3,4,6,7,8-octachloro-dibenzofuran were present as the isomers of chlorinated dioxins.

The content of each chlorinated dioxin was calculated as the toxicity equivalent (TEQ) corresponding to the activity of 2,3,7,8-tetrachlorodibenzo-p-dioxin. The value of TEQ of the entire chlorinated dioxins present in the above contaminated soil was 2,800 picograms/g of the soil.

(2) Selection of the microorganism having excellent ability of decomposing chlorinated dioxins

This step was conducted to find out the microorganism most suited for decomposition of the chlorinated dioxins contained in the soil contaminated with the dioxins which was obtained in (1) described above.

To 100 g of the sample of the soil, 10 g of corn bran and 10 g of chip of oak were added as the nutrients and then water was added in an amount such that the content of water was 65% by weight. The prepared mixture was sterilized in an autoclave at 121°C for 30 minutes. Pieces having the shape of a cork stopper having a diameter of 7 mm were punched out from cultures of 3 types of microorganisms, i.e., Schizophyllum commune: IFO-6505 belonging to the Schizophyllum genus, Trametes versicolor: IFO-4941 belonging to the Trametes genus and Pleurotus pulmonaris: IFO-31345 belonging to the Pleurotus genus, which were cultured on culture media of agar containing potato dextrose in advance. Five pieces of the culture of microorganisms prepared above were added to and mixed with the above soil containing the nutrients. The prepared mixtures were placed into an incubator kept at 25°C and the microorganisms were allowed to grow for 2 weeks. After the 2 weeks, corn bran sterilized in advance was added in an amount corresponding to 5% by weight and sterilized water was added in an amount such that the content of water was adjusted to 65% by weight. The microorganisms were allowed to grow for further 2 weeks in the obtained mixtures.

After the above period of growth, the samples of the soil was analyzed with respect to the isomers of the chlorinated dioxins and the fraction of decomposition of chlorinated dioxins due to the microorganism was obtained from the fraction of the decrease in the contents of the chlorinated dioxins in the soil after the growth of the microorganisms relative to the corresponding contents before the growth of the microorganisms. The fraction of decomposition of chlorinated dioxins was found to be as follows: 42% in the culture of Schizophyllum commune: IFO-6505; 48% in the culture of Trametes versicolor: IFO-4941; and 35% in the culture of Pleurotus pulmonaris: IFO-3134.

It was found from the above results that, as the microorganism suited for decomposing chlorinated dioxins contained in the soil contaminated with chlorinated dioxins which was obtained in (1) described above, Trametes versicolor: IFO-4941 belonging to the Trametes genus was most suitable, Schizophyllum commune: IFO-6505 belonging to the Schizophyllum genus was suitable next to the above and Pleurotus pulmonaris: IFO-3134 belonging to the Pleurotus genus showed a somewhat lower fraction of decomposition of chlorinated dioxins.

(3) Growing resident microorganisms in the obtained soil

Into each of 5 sterilized plastic bottles having a cap and equipped with a sterilizing filter, 100 g of the soil contaminated with chlorinated dioxins which was obtained in (1) described above was placed.

The above 5 bottles were designated as bottles (a) to (e). To bottle (a), 5 g of lignin was added, 5 ml of oleic acid was added to bottle (b), 0.5 ml of cinnamic acid was added to bottle (c) and 0.5 ml of cinnamaldehyde was added to bottle (d). Nothing was added to bottle (e). In bottles (a) to (d), the soil and the added agent were mixed together. All bottles were placed into an incubator kept at 25°C for 2 weeks and the growth of resident microorganisms in the soil was promoted. After 2 weeks, the soils in the bottles were taken out and the residual amounts of the chlorinated dioxins were measured. The fractions of decomposition of chlorinated dioxins were calculated based on the residual amount of chlorinated dioxins in the soil to which no agents were added.

As the result, the fractions of decomposition of chlorinated dioxins were as follows: (a) 14.6% when lignin was added; (b) 3.4% when oleic acid was added; (c) 12.8% when cinnamic acid was added; and (d) 3.4% when cinnamaldehyde was added. Therefore, it was confirmed that resident microorganisms having the ability of decomposing chlorinated dioxins were present in the soil contaminated with chlorinated dioxins which was obtained in (1) described above. The results are shown in Table 9.

Table 9

| Added agent | Fraction of decomposition of chlorinated dioxins |
|---|---|
| | (%) |
| Lignin | 14.6 |
| Oleic acid | 3.4 |
| Cinnamic acid | 12.8 |
| Cinnamaldehyde | 3.4 |
| None | 0.0 |

(4) Suppressing growth of resident microorganisms in the obtained soil and growing microorganisms having the ability of decomposing chlorinated dioxins

Into each of 6 sterilized plastic bottles having a cap and equipped with a sterilizing filter, 100 g of the soil contaminated with chlorinated dioxins which was obtained in (1) described above was placed. Into each bottle containing the soil, 10 g of corn bran sterilized at 121°C for 15 minutes was added and mixed with the soil. Then, 18 ml of tap water was added to each bottle and the content of water was adjusted to 47% by weight.

One of the bottles prepared above was completely sterilized in an autoclave at 121°C for 15 minutes. Another of the bottles was left without any treatments.

The remaining 4 bottles were subjected to the heating treatment at 85°C for 60 minutes in advance. To one of the bottles treated by heating, 10 ml of a 70% by volume aqueous solution of ethanol was added for treating the soil for suppressing growth of resident microorganisms in the soil. To another of the bottles treated by heating, 2 ml of a 30% by weight aqueous solution of hydrogen peroxide was added for treating the soil for suppressing growth of resident microorganisms in the soil. To still another of the bottles treated by heating, 1 g of calcium hypochlorite was added for treating the soil for suppressing growth of resident microorganisms in the soil. The remaining one of the bottles treated by heating was left without any treatments.

As described above, some of the bottles were subjected to various treatments for suppressing growth of resident microorganisms in the soil and some of the bottles were left without treatments. After the bottles were left standing for 24 hours, Schizophyllum commune: IFO-6505 belonging to the Schizophyllum genus, which was selected as the microorganism having the ability of decomposing chlorinated dioxins, was inoculated at the central portion of the surface of the soil in each of the six bottles. All bottles were placed into an incubator kept at 28°C and the growth wa promoted. The results of growth of Schizophyllum commune was evaluated by visual observation 4 days after the inoculation. The results are shown in Table 10.

Table 10

| Condition of heating treatment | Agent for chemical treatment | Diameter of colony of microorganism |
|---|---|---|
| | | (cm) |
| 121°C, 15 minutes | - | 5.3 |
| 85°C, 60 minutes | 70% ethanol | 2.1 |
| 85°C, 60 minutes | 30% aq. soln. of $H_2O_2$ | 4.9 |
| 85°C, 60 minutes | hypochlorous acid | 4.1 |
| 85°C, 60 minutes | - | 4.6 |
| no heating treatments | - | 0.0 |

As shown by the above results, it was confirmed that resident microorganisms adversely affecting the growth of the microorganisms having the ability of decomposing chlorinated dioxins were present in the soil obtained in (1) described above. It was also shown that, as the treatment for suppressing growth of the resident microorganisms, the complete sterilization at 121°C was effective and the heating treatment at a temperature of about 80°C in advance, followed by the treatment with ethanol, an aqueous solution of hydrogen peroxide or calcium hypochlorite was also effective.

It was confirmed in (3) described above that resident microorganism having the ability of decomposing chlorinated dioxins were present in the soil contaminated with the chlorinated dioxins and it was also confirmed that resident microorganisms suppressing the growth of the microorganisms having the ability of decomposing chlorinated dioxins are also present in the soil contaminated with the chlorinated dioxins. Therefore, it was decided to be effective for cleaning the soil contaminated with the chlorinated dioxins that the microorganisms having the ability of decomposing chlorinated dioxins were allowed to grow after a treatment for suppressing growth of the resident microorganisms was conducted.

The microorganisms having the ability to decompose chlorinated dioxins were cultured. Into each of 3 vessels for solid culture equipped with a cap having with a sterilizing filter in which a stainless steel vat having an inner dimension of 25 cm × 35 cm and a depth of 8 cm was disposed, 500 g of whole grain barley and 340 ml of tap water were placed. After being left standing for 6 hours, the mixture was sterilized in an autoclave at 121°C for 15 minutes.

In the 3 vessels for solid culture containing the culture medium of whole grain barley, Schizophyllum commune: IFO-6505, Trametes versicolor: IFO-4941 and Pleurotus pulmonaris: IFO-3134 were separately inoculated as the microorganisms having the ability of decomposing chlorinated dioxins and cultured in an incubator kept at 25°C for 10 days.

Then, to prepare a medium for solid culture, 7.5 kg of saw dust of cherry trees, 7.5 kg of saw dust of Japanese chestnut oak trees, 4 kg of corn bran, 0.15 kg of crushed rinds of orange, 0.18 kg of rice bran, 0.12 kg of bean curds and 0.55 kg of barley were placed into a large mixer. Tap water was added to the mixture while the content of water was measured by an infrared meter of the water content and a culture medium having a content of water of 65% by weight was prepared.

Into each of 9 vessels for solid culture equipped with a cap having a sterilizing filter in which a stainless steel vat having an inner dimension of 25 cm × 35 cm and a depth of 8 cm was disposed, 2 kg of the culture medium prepared above was placed and sterilized at 121°C for 40 minutes. The above 9 vats were divided into 3 groups of 3 vats. The vats were each inoculated with 10 g of the above cultured product of Schizophyllum commune: IFO-6505, Trametes versicolor: IFO-4941 or Pleurotus pulmonaris: IFO-3134 in a manner such that the vats in the same group had the same microorganism. The vats were placed into a large culture tank and the inoculated microorganisms were cultured at 25°C for 35 days. At the end of the culture, the cultured product in each vat was filled with hypha and a block was formed. When the content of the vat was taken out of the vat, the shape of the block remained firmly and the inner shape of the vat was maintained.

Using the cultured product obtained above in a great amount, the cleaning treatment of a great amount of soil contaminated with chlorinated dioxin was conducted. As the contaminated soil, 150 kg of soil was taken in the same area as the area where the soil sample was taken in (1) described above. The soil was mixed well by a concrete mixer for 60 minutes so that the entire amount of the soil became uniform. The content of water in the soil was measured and found to be 32% by weight.

The contaminated soil prepared above was placed into 5 plastic containers in an amount such that each container contained 30 kg of the soil. The plastic container had an inner dimension of 40 cm × 50 cm and a depth of 30 cm and had a cap plate. The bottom plate and the cap plate of the plastic container had each 48 holes having a diameter of 4 cm. A plastic net having an opening of 1 mm was attached to the bottom plate of the container to prevent the soil from coming out of the container. The container containing the contaminated soil was placed into a larger plastic container having an inner dimension of 55 cm × 70 cm and a depth of 40 cm so that water flowed out of the inner container was kept within the system.

Of the above five containers containing the contaminated soil, 4 containers were treated with ethyl alcohol. Ethyl alcohol having the purity of 100% was sprayed uniformly to the surface of the contaminated soil in an amount of 500 ml in each container. Then, the outer large container was closed with a cap plate and placed into an autoclave. The large container was treated for suppressing growth of resident microorganisms in the soil by heating at 85°C for 3 hours. After the heating treatment, the container was transferred into a glass green house and left standing for 12 hours after the cap plate of the outer large container was removed. Then, three containers among the above four containers were treated by inoculation with the three microorganisms, one microorganism in each container, in a manner such that the block of the microorganism obtained by the culture in the above was placed on the central portion of a net placed on the surface of the contaminated soil. The contaminated soil in the remaining one container was left without inoculation with any microorganisms having the ability of decomposing halogenated dioxins.

(5) Promotion of decomposition of chlorinated dioxins with enzymes produced by microorganisms

To promote the growth of the microorganisms having the ability of decomposing chlorinated dioxins which were inoculated to the contaminated soil in the containers in (4) described above and also to promote the decomposition of chlorinated dioxins with enzymes produced by the microorganisms, a mixture containing 50 kg of saw dust of chestnut oak trees, 10 kg of an aqueous solution of lignin (the content of solid substances: 10% by weight), 300 g of polyoxyethylene sorbitan monolaurate and 250 g of cinnamic acid was used. The above mixture was placed on the surface of the contaminated soil in an amount of 3 kg in each container and hoed into the soil. Then, tap water was uniformly sprayed to the contaminated soil in the container in an amount of 9 liters in each container and the whole combination was weighed after the cap plate of the large outer container was removed.

The containers were placed in a green house which was heated during the night so that the temperature inside the green house was not lowered to 20°C or lower. During the daytime, the maximum temperature inside the green house reached 41°C and the maximum temperature of the contaminated soil in the containers reached 32°C. The growth of the microorganisms having the ability of decomposing chlorinated dioxins and the decomposition of chlorinated dioxins with the enzymes produced by the microorganisms were allowed to proceed for 3 months in the green house. During this period, the whole combination was weighed after the cap plate of the large outer container was removed once in a week and sterilized water was supplied in an amount corresponding to the decrease in the weight from the initial weight.

(6) Adjustment of the condition of growth of the microorganisms by monitoring the amount of the enzyme produced by the microorganism and released into the soil

The amount of laccase which was produced by the microorganism having the ability of decomposing chlorinated dioxins inoculated to the contaminated soil in the container in the above and released into the soil was monitored as the follows.

The soil in the container in which the microorganism was growing was taken out in an amount of 10 g. To the soil, 100 ml of sterilized water was added and the mixture was stirred at the room temperature for 1 hour. The obtained suspension was treated by centrifugation at 2,000 rpm and the supernatant liquid was used as the extract. The extract was added to a solution containing 100 mmole of a buffer solution of malonic acid and having a pH adjusted to 4.5. To the resultant solution, 2 mmole of 4-aminoantipyrin and 1 mmole of phenol were added and the reaction was allowed to proceed at 30°C. When the reaction was completed, the absorbance of light having a wavelength of 500 nm was measured. The activity of laccase was obtained from the difference in the absorbance before and after the reaction. The activity of laccase was expressed as follows: when the absorbance through an optical path having a length of 1 cm increased by 1 in one minute, the amount of laccase which gave rise to such an increase was expressed as one unit:

As the result, the concentration of laccase produced by Schizophyllum commune: IFO-6505 in the soil was 0.8 units/g; the concentration of laccase produced by Trametes versicolor: IFO-4941 in the soil was 0.9 units/g; and the concentration of laccase produced by Pleurotus pulmonaris: IFO-31345 in the soil was 0.3 units/g.

It is shown by the above results that the release of the enzyme decomposing chlorinated dioxins could be further promoted by suitably adjusting the conditions of growth of the microorganisms having the ability of decomposing chlorinated dioxins growing in the container and by adding a substance stimulating release of the enzymes decomposing chlorinated dioxins.

(7) Measurement of the amount of decomposition of chlorinated dioxins by the microorganisms having the ability of decomposing chlorinated dioxins

The amounts of decomposition of chlorinated dioxins in the contaminated soil by the microorganisms having the ability of decomposing chlorinated dioxins in the operations conducted in (5) and (6) described above were measured. When the step of growing the microorganisms for 3 months in (5) described above was completed, cap plates of every containers were opened and beds of the microorganisms, saw dusts of Japanese chestnut oak trees and nets covering the surface of the soil were removed. Samples of the soil were taken in the portions of the soil ranging from the surface to the depth of 2 cm and also in the portions of the soil ranging from the depth of 2 cm to the depth of 10 cm. The amounts of the chlorinated dioxins remaining in the above samples of the soil were quantitatively measured in accordance with the combination of the gas chromatography and the mass spectroscopy and the toxicity equivalents (TEQ) corresponding to the toxicity of 2,3,7,8-tetrachlorodibenzo-p-dioxin were obtained. One soil sample each was taken from the contaminated soil without any treatments and the contaminated soil treated with ethyl alcohol alone, among the soil samples prepared in (4) described above, and analyzed quantitatively with respect to chlorinated dioxins. The results are shown in Table 11.

Table 11

| Inoculated microorganism | Portion of soil from which sample was taken | Toxicity equivalent (pg-TEQ/g) |
|---|---|---|
| Schizophyllum commune (IFO-6505) | surface to 2 cm below surface | 630 |
| | 2 to 10 cm below surface | 1540 |
| Trametes versicolor (IFO-4941) | surface to 2 cm below surface | 450 |
| | 2 to 10 cm below surface | 1400 |
| Pleurotus pulmonaris (IFO-31345) | surface to 2 cm below surface | 1050 |
| | 2 to 10 cm below surface | 1920 |
| No treatments | surface to 2 cm below surface | 2560 |
| Treatment with ethanol alone | surface to 2 cm below surface | 2340 |

As shown by the results in Table 11, the contents of the chlorinated dioxins in the soil in the containers were remarkably lower in the portions of the soil closer to the surface, i.e., in the portions closer to the portions of growth of the microorganisms having the ability of decomposing the chlorinated dioxins, than in other portions of the soil and the decomposition of chlorinated dioxins was promoted in the portions closer to the portions of growth of the microorganisms.

INDUSTRIAL APPLICABILITY

In accordance with the process of the present invention, hardly decomposable harmful substances which are contained in exhaust gas, waste water and ash released from incineration apparatuses and manufacturing apparatuses into the natural environment and accumulated in water and soil contaminated with the exhaust gas, the waste water and the ash can be made harmless by decomposition with enzymes exhibiting excellent stability and microorganisms producing the enzyme with stability. In particular, the process of the present invention can be applied effectively to decomposition of hardly decomposable harmful substances such as specific components in agricultural chemicals, materials and products of chemical industry, specific chemical substances produced during incineration of garbage and industrial waste materials and cleaning agents used in paper and pulp industry and high accuracy machinery industry.

**Claims**

1. A process for decomposing hardly decomposable harmful substances contained in soil, ash or water with a microorganism or an enzyme produced by a microorganism, wherein the soil, the ash or the water is treated for decreasing contents of miscellaneous other microorganisms or for sterilization and the treated soil, ash or water is brought into contact with at least one microorganism or enzyme selected from microorganisms having ability of decomposing the hardly decomposable harmful substances and enzymes produced by said microorganisms.

2. A process according to Claim 1, wherein the hardly decomposable harmful substances are substances selected from dioxins, halogenated biphenyls, halogenated hydrocarbons, bisphenols, alkylphenols, halogenated phenols and esters of phthalic acids.

3. A process according to Claim 1, wherein the enzymes produced by said microorganisms are manganese peroxidase, lignin peroxidase, laccase, benzene monooxygenase and benzene dioxygenase.

4. A process according to Claim 1, wherein the microorganisms having ability of decomposing the hardly decomposable harmful substances are microorganisms producing manganese peroxidase, microorganisms producing lignin peroxidase, microorganisms producing laccase, microorganisms producing benzene monooxygenase and microorganisms producing benzene dioxygenase.

5. A process according to Claim 1, wherein the microorganisms having ability of decomposing the hardly decomposable harmful substances are microorganisms belonging to any genera selected from genera of Schizophyllum, Pleurotus, Trametes, Lentinus, Rhizoctonia, Funalia, Pycnoporus, Merulius, Myceliophtora, Coprinus, Agaricus, Pholiota, Flammulina, Ganoderma, Daedaleopsis, Favolus, Lyophyllum, Aspergillus and Auricularia.

6. A process according to Claim 1, wherein the treatment for decreasing miscellaneous other microorganisms or for sterilization is conducted in accordance with a heating treatment, a chemical treatment or a combination of a heating treatment and a chemical treatment.

7. A process according to Claim 6, wherein the heating treatment is conducted at a temperature of 60°C or higher.

8. A process according to Claim 6, wherein the heating treatment is conducted using a heat generating substance which generates heat by reaction with oxygen or water.

9. A process according to Claim 1, which comprises successive steps of:

    (i) adding a heat generating substance which generates heat by reaction with oxygen or water to soil contaminated with the hardly decomposable harmful substances in an amount of 5% by weight or more based on an amount of the dried soil and stirring a resultant mixture for mixing;
    (ii) adding water to the soil containing the heat generating substance so that the heat generating substance reacts with water and a temperature of the soil is raised to 60°C or higher; and
    (iii) adding a microorganism having ability of decomposing the hardly decomposable harmful substances to the soil after the heated soil is left standing and a temperature of the soil is lowered to 40°C or lower.

10. A process according to Claim 9, wherein the heat generating substance is at least one substance selected from a group consisting of calcium oxide, iron powder, graphite, sulfur, iron(II) oxide, magnesium, molybdenum, nickel, tris(acetylacetonato)aluminum, bis(acetylacetonato)-copper, tris(acetylacetonato)iron(III), bis(acetylacetonato) magnesium, dibenzenemolybdenum, molybdenum hexacarbonyl, diethylsilanediol and diethylzinc.

11. A process according to Claim 9, which further comprises, between step (ii) and step (iii), a step (ii') of adjusting pH of the soil into a range of 4 to 10.

12. A process according to Claim 9, which further comprises, after step (iii), a step of adding water to the soil so that a content of water is adjusted to 15% by weight or more based on an amount of the soil.

13. A process according to Claim 6, wherein the chemical treatment is conducted by using an agent selected from ethyl alcohol, ethylene oxide, invert soaps, limonene, veratryl alcohol, diethyl dicarbonate, hydrogen peroxide, hypochlorous acid, hydrochloric acid and chloropicrin.

14. A process according to Claim 1, which comprises adding a nutrient of the microorganism having ability of decomposing the hardly decomposable harmful substances to the soil, the ash or the water containing the hardly decomposable harmful substances and bringing the soil, the ash or the water containing the added nutrient into contact with the microorganism.

15. A process according to Claim 1, wherein the hardly decomposable substances are brought into contact with the microorganism having ability of decomposing the hardly decomposable harmful substances or the enzyme produced by said microorganism in a system shielded from contamination with miscellaneous other microorganisms.

16. A process according to Claim 1, wherein inorganic residual chlorine compounds contained in the water containing the hardly decomposable harmful substances are removed or decomposed into chlorine ion before the water is brought into contact with the microorganism.

17. A process according to Claim 1, wherein the hardly decomposable harmful substances contained in the water is decomposed at a pH in a range of 3 to 11.

18. A process for decomposing hardly decomposable harmful substances in soil contaminated with hardly decomposable harmful substances, the process comprising steps of:

(a) conducting isomer analysis of the hardly decomposable harmful substances and calculating a toxic equivalent (TEQ) per a unit amount of the contaminated soil;
(b) growing microorganisms having ability of decomposing the hardly decomposable harmful substances in the soil contaminated with the hardly decomposable harmful substances and selecting from the grown microorganisms a group of microorganisms having excellent ability of decomposing the hardly decomposable harmful substances which are specified in step (a);
(c) adding nutrients to promote growth of resident microorganisms present in the soil contaminated with the hardly decomposable harmful substances when the resident microorganisms have ability to decompose the hardly decomposable harmful substances;
(d) treating the soil for suppressing growth of resident microorganisms present in the soil contaminated with the hardly decomposable harmful substances and inoculating and promoting growth of microorganisms having the ability of decomposing the hardly decomposable harmful substances when the resident microorganisms suppress growth of the microorganisms having the ability of decomposing the hardly decomposable harmful substances;
(e) promoting decomposition of the hardly decomposable harmful substances with enzymes produced by the microorganisms having the ability of decomposing the hardly decomposable harmful substances; and
(f) adjusting conditions for growth of the microorganisms having the ability of decomposing the hardly decomposable harmful substances by monitoring amounts of the enzymes having the ability of decomposing the hardly decomposable harmful substances produced by the microorganisms and released into the soil.

19. A process according to Claim 18, wherein the decomposition of the hardly decomposable harmful substances with the enzymes produced by the microorganisms is promoted by addition of at least one substance selected from a group consisting of surfactants, oleic acid, olive oil, linseed oil, fish oil and limonene.

# EP 1 238 718 A1

## INTERNATIONAL SEARCH REPORT

International application No.

PCT/JP00/07893

**A. CLASSIFICATION OF SUBJECT MATTER**

Int.Cl$^7$ B09C1/10, B09B3/00, C02F3/34

According to International Patent Classification (IPC) or to both national classification and IPC

**B. FIELDS SEARCHED**

Minimum documentation searched (classification system followed by classification symbols)

Int.Cl$^7$ B09C1/10, B09B3/00, C02F3/34

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | US, 5653675, A (Canon Inc.),<br>05 August, 1997 (05.08.97),<br>Claim; Column 1, lines 18 to 21; Column 1, line 59 to<br>Column 2, line 7<br>& JP, 7-88465, A | 1,2,14,15<br>3-6 |
| Y | JP, 10-323646, A (Fukuoka Pref.),<br>08 December, 1998 (08.12.98),<br>Claims; Column 3, lines 19 to 20 (Family: none) | 3-6 |
| Y | US, 5486474, A (Mycotech Corporation),<br>23 January, 1996 (23.01.96),<br>Claims<br>& JP, 6-505634, A & WO, 92/013960, A1<br>& EP, 569555, A | 3-6 |
| P,X | JP, 2000-317436, A (Kurita Water Industries Ltd.),<br>21 November, 2000 (21.11.00),<br>Claims; Column 3, lines 31 to 50; Column 4, lines 3 to<br>9; Column 5, lines 29 to 34 (Family: none) | 1,2,6-10,13-15 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>05 February, 2001 (05.02.01) | Date of mailing of the international search report<br>20 February, 2001 (20.02.01) |
|---|---|
| Name and mailing address of the ISA/<br>Japanese Patent Office | Authorized officer |
| Facsimile No. | Telephone No. |

Form PCT/ISA/210 (second sheet) (July 1992)

**EP 1 238 718 A1**

## INTERNATIONAL SEARCH REPORT

International application No.

PCT/JP00/07893

C (Continuation). DOCUMENTS CONSIDERED TO BE RELEVANT

| Category* | Citation of document, with indication, where appropriate, of the relevant passages | Relevant to claim No. |
|---|---|---|
| A | JP, 11-28449, A (Canon Inc.), 02 February, 1999 (02.02.99), Claims | 1-19 |

Form PCT/ISA/210 (continuation of second sheet) (July 1992)

35